# EUROPEAN PATENT SPECIFICATION

(11) **EP 1 018 708 B1**
(45) Date of publication and mention of the grant of the patent: **11.03.2015**
(21) Application number: 00100121.3
(22) Date of filing: 05.01.2000
(51) Int. Cl.: G06T 7/00

(54) **System and method for sampling and/or placing objects using low discrepancy sequences**
Anordnung und Verfahren zur Stichprobenauswahl und/oder Platzierung von Objekten mittels Sequenzen niedriger Abweichung
Système et méthode d'échantillonage et de placement d'objets, utilisant des séquences à écarts réduits

(30) Priority: 06.01.1999 US 227506; 06.01.1999 US 227507; 06.01.1999 US 227508; 27.08.1999 US 385121
(43) Date of publication of application: 12.07.2000
(73) Proprietor: National Instruments Corporation, Austin, Texas 78759-3504 (US)
(72) Inventor: Wenzel, Lothar, Round Rock, Texas 78681 (US); Nair, Dinesh, Austin, Texas 78727 (US); Vazquez, Nicolas, Austin, Texas 78753 (US); DeKey, Samson, Austin, Texas 78759 (US)
(74) Representative: Heselberger, Johannes

(56) References cited:
- EP-A- 0 755 024
- WO-A-97/50060
- HARVEY A L ET AL: "Methods For Fast Image Object Recognition In Robotics" PROCEEDINGS, IEEE INTERNATIONAL WORKSHOP ON EMERGING TECHNOLOGIES AND FACTORY AUTOMATION, 1992, pages 639-641, XP010287260 Melbourne
- WOO T C ET AL: "DIMENSIONAL MEASUREMENT OF SURFACES AND THEIR SAMPLING" COMPUTER AIDED DESIGN, ELSEVIER PUBLISHERS BV., BARKING, GB, vol. 25, no. 4, 1 April 1993 (1993-04-01), pages 233-239, XP000373118 ISSN: 0010-4485
- LI P ET AL: "Non-linear resolution vision systems" DECISION AIDING FOR COMPLEX SYSTEMS. CHARLOTTESVILLE, VA., OCT. 13 - 16, 1991, PROCEEDINGS OF THE INTERNATIONAL CONFERENCE ON SYSTEMS, MAN AND CYBERNETICS, NEW YORK, IEEE, US, vol. 1 _, 13 October 1991 (1991-10-13), pages 25-28, XP010054696 ISBN: 0-7803-0233-8
- SAYINER N ET AL: "A non-uniform sampling technique for A/D conversion" PROCEEDINGS OF THE INTERNATIONAL SYMPOSIUM ON CIRCUITS AND SYSTEMS. (ISCS). CHICAGO, MAY 3 - 6, 1993, NEW YORK, IEEE, US, vol. 2, 3 May 1993 (1993-05-03), pages 1220-1223, XP010115325 ISBN: 0-7803-1281-3
- SADEGH P ET AL: "Optimal sensor configuration for complex systems" INTELLIGENT CONTROL (ISIC), 1998. HELD JOINTLY WITH IEEE INTERNATIONAL SYMPOSIUM ON COMPUTATIONAL INTELLIGENCE IN ROBOTICS AND AUTOMATION (CIRA), INTELLIGENT SYSTEMS AND SEMIOTICS (ISAS)., PROCEEDINGS OF THE 1998 IEEE INTERNATIONAL SYMPOSIUM ON GAITH, 14 September 1998 (1998-09-14), pages 376-380, XP010299188 ISBN: 0-7803-4423-5
- NAIR D ET AL: "Image processing and low discrepancy sequences" ADVANCED SIGNAL PROCESSING ALGORITHMS, ARCHITECTURES, AND IMPLEMENTATIONS IX, DENVER, CO, USA, 19-21 JULY 1999, vol. 3807, pages 102-111, XP008016374 Proceedings of the SPIE - The International Society for Optical Engineering, 1999, SPIE-Int. Soc. Opt. Eng, USA ISSN: 0277-786X
- DAVENPORT T R ET AL: "Implementation Of Quasi-Random Generators And Their Use In Discrete Event Simulation" PROCEEDINGS OF THE 1989 WINTER SIMULATION CONFERENCE, 1989, pages 419-427, XP010305714
- PETERFREUND N ET AL: "NONUNIFORM IMAGE REPRESENTATION IN AREA-OF-INTEREST SYSTEMS" IEEE TRANSACTIONS ON IMAGE PROCESSING, IEEE INC. NEW YORK, US, vol. 4, no. 9, 1 September 1995 (1995-09-01), pages 1202-1212, XP000533953 ISSN: 1057-7149
- MANDALIA A D ET AL: "Low-level and high-level correlation for image registration (IC inspection)", PROCEEDINGS OF THE INTERNATIONAL CONFERENCE ON SYSTEMS, MAN, AND CYBERNETICS. LOS ANGELES, NOV. 4 - 7, 1990; [PROCEEDINGS OF THE INTERNATIONAL CONFERENCE ON SYSTEMS, MAN, AND CYBERNETICS], NEW YORK, IEEE, US, vol. -, 4 November 1990 (1990-11-04), pages 206-208, XP010037904, DOI: 10.1109/ICSMC.1990.142093 ISBN: 978-0-87942-597-5
- BRUNO TUFFIN: 'On the use of low discrepancy sequences in Monte Carlo mehtods', [Online] November 1996, pages 1 - 29 Retrieved from the Internet: <URL:http://citeseerx.ist.psu.edu/viewdoc/d ownload;jsessionid=986D5263E366A2EEEA80292A A0539F0A?doi=10.1.1.37.9640&rep=rep1&type=p df> [retrieved on 2014-04-23]

## Description

### Field of the Invention

The present invention relates to applications involving sampling of objects, such as images, or placement or arrangement of objects, such as sensors, using Low Discrepancy sequences, wherein the use of Low Discrepancy sequences provides improved efficiency. The present invention includes methods and systems as defined in the appended claims.

### Description of the Related Art

In many applications it is necessary or desired to sample an image to generate sample pixels which characterize the image, rather than using every pixel of the image. These sample pixels can then be used in performing calculations and comparisons associated with the image. Sampling an image may be very advantageous in applications such as pattern matching, image reconstruction, and motion estimation.

In addition, many applications require placement of multiple objects, such as sensors, within a given area. Here it is greatly desirable to optimally place the sensors for best coverage of the area, i.e., to place the sensors in locations which maximize reception. This allows usage of a lesser number of sensors to cover an area, thus reducing cost.

Prior art techniques for sampling an image and for determining placement locations for objects have utilized either a homogeneous sampling, such as grid-based sampling, or have utilized random points or pixels within the placement or image area. However, each of the above prior art techniques operates to select a subset of the total available pixels or total possible locations which does not necessarily best represent or characterize the image or placement objectives.

For example, an improved system and method is desired for characterizing an image with a fewer number of sample pixels. Image characterization is used, for example, in performing correlation based pattern matching. Pattern matching applications often apply an image sampling method to characterize the temple image with a lesser number of sample pixels. Pattern matching applications are used to find instances of the template image or image object in a larger target image. Examples of pattern matching applications include machine vision applications such as process monitoring, feedback control, and laboratory automation; image and video compression; and jitter compensation in video cameras; among others.

Many other operations require and/or desire a more efficient characterization of images. Examples include methods of acquiring image statistics, such as mean gray-level value or standard deviation of gray-levels, methods for locating a known object in an image, methods for estimating the motion of objects in successive acquired images, image registration methods, and methods for color matching, among others. Therefore, an improved system and method is desired for characterizing an image. More particularly, an improved system and method is desired for characterizing or selecting samples or pixels from a template image which best represent the template image with the fewest samples possible.

As discussed above, in many applications it is desired to determine the optimal placement locations for sensors within a given area. For example, a CCD (charge coupled device) sensor in a camera comprises an array of light sensitive electronic capacitors (CCD sensor elements) that are typically placed in a grid based pattern. If fewer CCD sensors elements could be used, the cost of the CCD sensor would be lessened. Placement of CCD sensor elements according to a uniform grid or random placement procedure may not provide the optimal locations for the sensors. Therefore an improved method is desired for determining the placement locations for CCD sensor elements. Other applications where the optimal placement of sensors is desired include the placement of temperature sensors and microphones in a planar array, as well as placement of transmitters/receivers (sensors) for radar, sonar, topography, and magnetic resonance imaging applications.

Meshes are used in many engineering applications including mechanical, structural, and design applications. Prior art methods typically use a grid based mesh, wherein the vertices of the mesh are placed according to a grid pattern. If a fewer number of vertices is used, while achieving substantially the same results, computer memory, time, and other resources are reduced. Therefore an improved method for determining mesh vertices is desired.

Therefore, improved systems and methods are desired for optimally sampling objects, such as pixels in an image; for optimally placing or arranging objects, such as sensors; and for optionally determining locations of vertices in a grid or mesh design.

### Pattern Recognition

In many applications it is necessary or desired to find a template image or image object in a larger target image. Such applications include machine vision applications including process monitoring, feedback control, and laboratory automation; image and video compression; and jitter compensation in video cameras, among others.

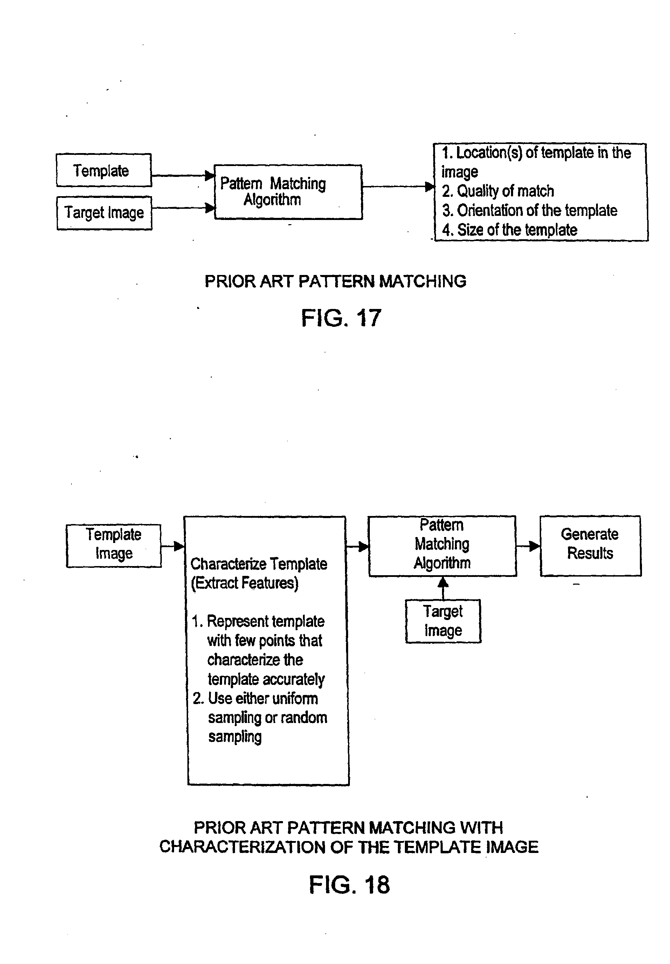

Prior art pattern recognition systems have typically used a template matching technique wherein the stored image or pattern to be located, referred to as the template, is iteratively compared with various corresponding portions of an image in which it is desired to locate the template, referred to as the target image. Figure 17 illustrates the pattern matching problem as known in the prior art. As shown, the pattern matching problem involves a template image, wherein one or more instances of the template image are desired to be located in the target image. The template image and the target image are provided to a pattern matching algorithm which performs the pattern matching. The pattern matching algorithm generally operates to compare the pixels in the template image, or a selected subset of sample pixels, against each of the possible various locations in the target image. Typically, the pattern matching algorithm involves comparing the template image, or a subset of sample pixels representing the template image, against locations in the target image on a horizontal pixel column basis and horizontal scan line basis. In other words, the sample pixels representing the template image are compared against a portion of the pixels in the target image, such as by using a 2D correlation, the sample pixels representing the template are then moved down or across a one pixel scan line or one pixel column in the target image, and the pattern matching algorithm is repeated, etc. Thus, the pattern matching algorithm generally involves comparing the template image pixels against all possible locations in the target image in an iterative fashion. The pattern matching produces the location of the template in the image, the quality of match and possibly the orientation, size and/or scaling of the template.

The template is compared with portions of the target image typically utilizing a correlation based pattern matching, i.e., using normalized two dimensional correlation (normalized 2D correlation). This 2D correlation is performed by placing the template over the respective portion of the image and performing a complete normalized 2D correlation between the pixels in the template and the pixels in the corresponding portion of the image. This correlation generally produces a correlation value which indicates the degree of correlation or match. For example, the correlation value may range between -1 and +1, wherein +1 indicates a complete match, 0 indicates no match, i.e., that the two images are uncorrelated, and -1 indicates that the two images are anti-correlated, i.e., a complete reversal of a match.

The normalized 2D correlation operation is based on a point-wise multiplication wherein the template is first placed over a portion of the image, each point or pixel of the template is multiplied with the corresponding pixel in the respective portion of the image, and the result is summed over the entire template. Also, as noted above, the template image is generally compared with each possible portion of the target image in an iterative fashion. This correlation-based pattern matching technique is thus very computationally intensive.

Various optimizations or algorithms have been developed to provide a more efficient correlation-based pattern matching. One prior art technique is to use selected samples or pixels from the template image, referred to as sample pixels, to represent the template image and hence to reduce the number of computations in the correlation.

Figure 18 illustrates the pattern matching process of the prior art which involves characterization of the template with a reduced number of sample pixels. In this process, a characterization of the template is performed to extract features from the template image. In other words, the template is characterized to represent the template image with a lesser number of points or pixels, referred to as sample pixels, which presumably accurately characterize the template image. The template image is characterized in this fashion because the time required for the pattern matching is generally directly proportional to the number of points or pixels representing the template image which are used in the pattern matching. Thus the template is characterized to reduce the number of samples or pixels which are used in the correlation operation, thereby reducing the amount of computation. Once a lesser number of sample pixels have been generated, these sample pixels are then used in the pattern matching algorithm to locate instances of the template image in the target image.

Prior art techniques for characterizing the template image have utilized a homogeneous sampling of the template, such as a grid-based sampling of the template, Another prior art technique is to utilize random points or pixels within the template image and to use these random sample pixels in the correlation-based pattern matching. However, each of the above prior art techniques operates to select a subset of the pixels in the template image which do not necessarily best represent or characterize the template image. In other words, homogeneous sampling or random sampling of the template image does not produce the optimum subset of samples or pixels which best represent the template image.

Therefore, an improved system and method is desired for correlation based pattern matching. More particularly, an improved system and method is desired for characterizing or selecting samples or pixels from a template image which best represent the template image with the fewest samples possible.

In addition, an improved system and method is also desired which reduces the number of correlation operations which are required in a pattern matching operation. Further, improved techniques are desired for performing pattern matching for rotated images, translated images and images which have changed in size.

WO 97/50060 is directed to a system and method for generating pixel values for pixels in an image using strictly deterministic technologies for generating sample points.

Mandalia et al., "Low-Level and High-Level Correlation for Image Registration" is directed to template matching. A two level correlation method is shown with a first fast correlation method employing random shifts and random pixel selection within the search image and an evidence scheme based on the Dempster-Shafer formalism in the second level to resolve uncertainties in the correlation peaks.

Tuffin, "On the Use of Low Discrepancy Sequences in Monte Carlo Methods" is directed to improving the approximation of integrals using Monte Carlo and quasi-Monte Carlo methods, wherein the quasi-Monte Carlo methods use deterministic sequences, called low discrepancy sequences.

### Summary of the Invention

The above-mentioned need is fulfilled by the subject matter of the independent claims. The present invention as defined in the appended claims comprises a system and method for improved image characterization, and pattern matching utilizing Low Discrepancy sequences. The present invention may be applied specifically to methods of image characterization, pattern matching, acquiring image statistics, object location, image reconstruction, motion estimation, among others. While these applications are discussed specifically and in detail, they are not intended to limit the use of Low Discrepancy sequences in other applications.

In a first embodiment, the present invention comprises a system and method for performing image characterization using Low Discrepancy sequences. The image characterization is preferably performed in a computer system. The image is received by and/or stored in the computer system and comprises a first plurality of pixels. The system and method comprises sampling the image using a Low Discrepancy sequence, also referred to as a quasi-random sequence, to determine a plurality of sample pixels in the image which characterize the image. The Low Discrepancy sequence is designed to produce sample points which maximally avoid one another, i.e., the distance between any two sample points is maximized. Also, the Low Discrepancy sequence sampling results in fewer points and provides a better characterization of the image than a random sequence sampling or a uniform sampling. Examples of the Low Discrepancy sequence include Halton, Sobol, Faure, and Niederreiter sequences.

Pattern matching is one embodiment in which image characterization using Low Discrepancy sequences may provide a significant increase in efficiency. In a pattern matching application, a template image is received and/or stored in the computer system and comprises a first plurality of pixels. According to one pattern matching embodiment, the system and method first comprises sampling the template image using a Low Discrepancy sequence, as described above. The sampling or characterization of the template image is preferably performed off-line prior to receipt of a target image. Thus the sampling or characterization of the template image is preferably not constrained by real time requirements. After the template image is sampled or characterized, the target image is preferably acquired by the computer system, through a camera or any other image capture method. The method then performs pattern matching using the sample pixels of the template image and the target image to determine zero or more locations of the template image in the target image.

Image characterization using Low Discrepancy sequences may also be used in other applications, such as acquiring image statistics, locating a known object in an image, estimating motion vectors indicating movement of objects in successive images, image reconstruction, image compression, and color matching, among others.

A second example not forming part of the present invention comprises a system and method for optimally placing sensors in a 2D array. In this example, a computer system generates a Low Discrepancy sequence for the desired placement application. The computer system then selects locations for the optimal placement of sensors using the generated Low Discrepancy sequence.

In one example not being part of the present invention, a placement method for CCD sensor elements using a Low Discrepancy sequence may enable a CCD sensor to receive substantially similar sensory information (as that from a grid based array of CCD sensor elements) while reducing the number of CCD sensor elements required. In this example, the area of the CCD sensor panel (the area in which the CCD sensor elements will be placed) and the number of desired CCD sensor elements may first be received by the computer system. This information may either be calculated by the computer or entered by the user, or obtained in any other manner. The computer then generates a Low Discrepancy sequence based on this information to determine the desired CCD sensor element locations on the CCD sensor panel. The generated locations represent the optimal locations for the desired number of CCD sensor elements. The CCD sensor is then constructed, wherein the sensor elements are placed at the locations indicated by the Low discrepancy sequence. The CCD sensor may be constructed by a user or by a machine, e.g., robotics.

The system and method of the present invention may be used for optimally placing other objects or sensors within a 2D or 3D array, such as placement of temperature sensors and microphones in a planar array, as well as placement of transmitters/receivers (sensors) for radar, sonar, topography and magnetic imaging applications, among others.

An example not being part of the present invention may be used to create meshes using Low Discrepancy sequences. Meshes are used by many engineering applications including mechanical, structural, and design applications. This example can be used to optimally create the mesh design, thus achieving improved results and/or improved efficiency.

In an embodiment, the method and system uses local stability analysis to aid in pattern matching. The method and system may first comprise sampling the template image, wherein the template image comprises a first plurality of pixels, and wherein the sampling produces a second lesser number of sample pixels. This sampling may use any of various sampling techniques, including a Low Discrepancy sequence as described above.

The method then performs a local stability analysis around at least a subset of the sample pixels to determine a lesser third number of sample pixels which have a desired degree of stability. The local stability analysis operates to ensure stability of each of the subset of sample pixels to spatial perturbations around the sample pixel. For each pixel, the local stability analysis preferably comprises finding a neighborhood around the sample pixel where the value of the sample pixel correlates highly with the template image pixel values in the neighborhood. The local stability analysis is preferably performed for all of the sample pixels. The method then performs a pattern matching using the third plurality of sample pixels and the target image to determine zero or more locations of the template image in the target image.

In one embodiment, the local stability analysis determines a plurality of sets of sample pixels with differing stability neighborhood sizes, and the pattern matching comprises performing a plurality of iterations of pattern matching using different sets of sample pixels. The iterations may be performed in a coarse to fine manner, e.g., using sets of sample pixels with successively smaller stability neighborhood sizes. These plurality of iterations of pattern matching may also use different step sizes for each of the different sets of sample pixels, wherein the step size preferably corresponds with the stability neighborhood size. Thus the plurality of iterations of pattern matching in the coarse to fine manner may use sets of sample pixels with successively smaller stability neighborhood sizes and/or successively smaller step sizes. For example, a first iteration of pattern matching may determine one or more candidate locations in the target image which possibly include the template image, and one or more second iterations of pattern matching are performed at the determined one or more candidate locations in the target image, and so on.

In an embodiment, the present invention comprises a system and method for performing pattern matching to locate one or more instances of a rotated or scaled template image in a target image. The method comprises first sampling the template image along one or more rotationally invariant paths, preferably circular perimeters, to produce one or more sets of sample pixels. The method then comprises performing pattern matching using a cyclic correlation between each of the one or more sets of sample pixels and the target image to determine zero or more locations of the template image in the target image. This pattern matching detects rotated versions of the template image in the target image.

In one embodiment, the method includes performing a local stability analysis around at least a subset of the sample pixels. The method then performs pattern matching using one or more sets of sample pixels along one or more circular perimeters based on the local stability analysis. The local stability analysis may determine a plurality of sets of sample pixels with differing stability neighborhood sizes. In this case, the pattern matching comprises performing a plurality of iterations of pattern matching using different sets of sample pixels, preferably in a coarse to fine manner, e.g., using sets of sample pixels from circular paths with successively smaller stability neighborhood sizes. The pattern matching may also use different step sizes for each of the different sets of sample pixels. As discussed above, a first iteration of pattern matching may determine one or more candidate locations and corresponding rotation values in the target image which possibly include the template image, and one or more second iterations of pattern matching are performed at the determined one or more candidate locations in the target image using the respective rotation values, and so on. A final pattern matching may utilize substantially all of the template image pixels at the respective candidate locations and using the determined rotation values.

### Brief Description of the Drawings

A better understanding of the present invention can be obtained when the following detailed description of the preferred embodiment is considered in conjunction with the following drawings, in which:
Figure 1 illustrates a computer system which may be used for image characterization, sensor placement, or pattern matching according to the present invention;
Figure 2 is a flowchart illustrating a method of image characterization using a Low Discrepancy sequence;
Figure 2A is a graph illustrating an array of randomly selected coordinates on a 2D grid;
Figure 2B is a graph illustrating an array of coordinates selected by a Low Discrepancy sequence on a 2D grid;
Figure 3 illustrates an image acquisition or video capture system according to one embodiment;
Figure 4 is a high-level block diagram of the image acquisition system;
Figure 5 is a flowchart illustrating a pattern matching method using a Low Discrepancy sequence;
Figure 6 is a flowchart illustrating a method of acquiring image statistics using a Low Discrepancy sequence;
Figure 7 is a flowchart illustrating a method of image reconstruction using a Low Discrepancy sequence;
Figure 8 is a flowchart illustrating a method of motion estimation using a Low Discrepancy sequence;
Figure 8A is a flowchart illustrating a second type of motion estimation using a Low Discrepancy sequence;
Figure 9 is a flowchart illustrating a method of locating an object within an image using a Low Discrepancy sequence;
Figure 10 is a flowchart illustrating a method of placing objects within a determined spatial area using a Low Discrepancy sequence;
Figure 11 is a flowchart illustrating a method of placing sensors within a determined spatial area using a Low Discrepancy sequence;
Figure 12 is a flowchart illustrating a method of placing CCD sensors within a determined spatial area using a Low Discrepancy sequence;
Figure 12A is an example of CCD sensor elements placed using a grid based pattern;
Figure 12B is an example of CCD sensor elements placed using a Low Discrepancy sequence;
Figure 13 is a flowchart illustrating a method of generating a mesh using a Low Discrepancy sequence;
Figure 14 is a flowchart illustrating a method of placing sensors within a determined three dimensional spatial area using a Low Discrepancy sequence;
Figure 15 is a flowchart illustrating a method of acquiring image statistics from a 3D image using a Low Discrepancy sequence;
Figure 16 is a flowchart illustrating a method of acquiring image statistics from a 1D signal using a Low Discrepancy sequence;
Figure 17 illustrates the pattern matching as performed in the prior art;
Figure 18 illustrates pattern matching performed in the prior art which includes characterization of the template image with fewer pixels for reduced computation;
Figure 19 is a flowchart diagram illustrating the generation of sample pixels using local stability analysis according to the preferred embodiment;
Figure 20 is a flowchart diagram illustrating the pattern matching method using a coarse to fine search according to the preferred embodiment;
Figure 21 is a flowchart diagram illustrating the pattern matching method of the preferred embodiment, incorporating the flowcharts of Figures 5, 19- 20;
Figures 22a - 22f illustrate pattern matching without a step size according to the prior art;
Figures 23a - 23f illustrate pattern matching using a 9 x 9 step size based on local stability analysis performed according to the present invention;
Figures 24a - 24f illustrate pattern matching using a 5 x 5 step size based on local stability analysis performed according to the present invention;
Figure 25 is a flowchart diagram illustrating the pattern matching method for rotation invariant matching according to the present invention;
Figure 26 is a flowchart diagram illustrating the pattern matching method for rotation invariant matching according to the preferred embodiment of the present invention; and
Figures 27A, 27B and 28 illustrate the rotation invariant pattern matching method.

### Detailed Description

The present invention relates to a method for performing image characterization using Low Discrepancy sequences and to a corresponding system.

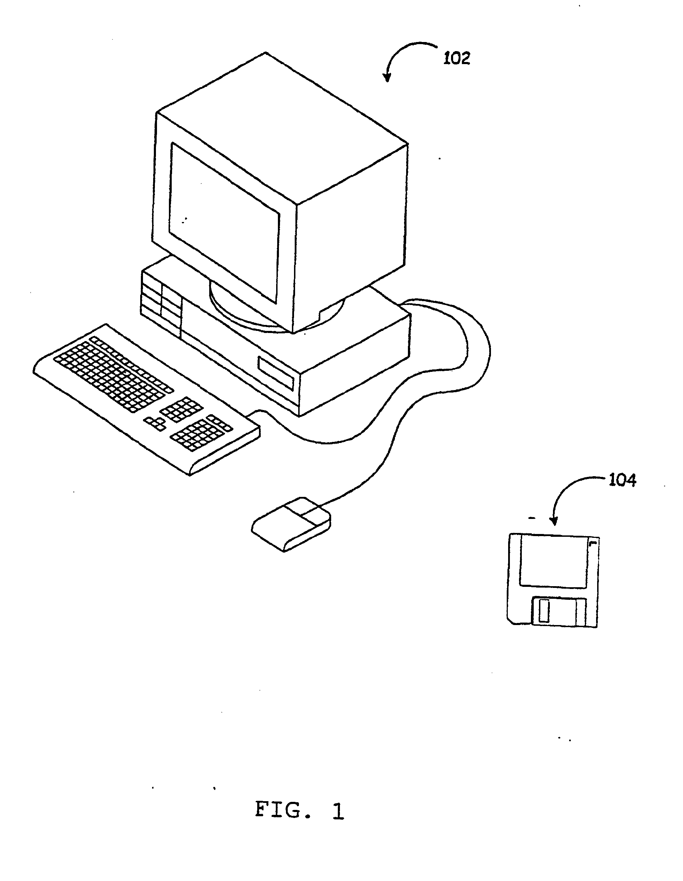

### Figure 1- Computer System

Figure 1 illustrates a computer system 102 which may be used according to the present invention. The computer system 102 may be used, for example, to perform image characterization, pattern matching, generation of image statistics, image location, and motion estimation, using Low Discrepancy sequences. The computer system 102 may also be used to perform object or sensor placement, such as for CCD sensor elements, microphones, temperature sensors, etc., using Low Discrepancy sequences. The computer system 102 may further be used to determine vertex locations in a grid or mesh design. The computer system 102 may also be used to perform enhanced pattern matching techniques, such as local stability analysis or rotation invariant pattern matching. The computer system 102 comprises one or more processors, a memory, a display, and an input such as a keyboard or mouse, and any other components necessary for a computer system.

The present invention is preferably implemented by one or more software programs stored on a memory medium of the computer system and executed by a processor of the computer system. The term "processor" is intended to include various types of processors, CPUs, DSPs, microcontrollers, or programmable logic, among others. The term "memory medium" is intended to include various types of memory or storage, including an installation medium, e.g., a CD-ROM, or floppy disks 104, a computer system memory such as DRAM, SRAM, EDO RAM, Rambus RAM, etc., or a non-volatile memory such as a magnetic media, e.g., a hard drive, or optical storage. The memory medium may comprise other types of memory as well, or combinations thereof. In addition, the memory medium may be located in a first computer in which the programs are executed, or may be located in a second different computer which connects to the first computer over a network. In the latter instance, the second computer provides the program instructions to the first computer for execution.

Also, the computer system 102 may take various forms, including a personal computer system, mainframe computer system, workstation, network appliance, Internet appliance, personal digital assistant (PDA), television system or other device. In general, the term "computer system" can be broadly defined to encompass any device having a processor which executes instructions from a memory medium.

The software program may be implemented in any of various ways, including procedure-based techniques, component-based techniques, and/or object-oriented techniques, among others. For example, the software program may be implemented using ActiveX controls, C++ objects, JavaBeans, Microsoft Foundation Classes (MFC), or other technologies or methodologies, as desired. A processor executing code and data from the memory medium comprises a means for sampling and/or placing objects according to the methods or flowcharts described below.

The computer system 102 is operable to calculate Low Discrepancy sequences and use these sequences for sampling pixels of an image (image characterization) or for determining locations or placement of objects or sensors (sensor placement), or for determining vertex locations in a mesh design. The computer system 102 is also operable to perform improved pattern matching techniques.

Low Discrepancy sequences comprise mathematical sequences that are efficient samples of high dimensional spaces. A Low Discrepancy sequence is also referred to as a quasi-random sequence or a sub-random sequence. The Low Discrepancy sequence is designed to produce sample points or locations which maximally avoid each other, e.g., is designed to produce sample pixels which best represent an image or points/locations which best cover an area. Examples of Low Discrepancy sequences include the Halton sequence, the Sobol sequence, the Faure sequence and the Niederreiter sequence, wherein differences between these are minor from a real world applications point of view. Sampling an image using a Low Discrepancy sequence results in fewer sample pixels to characterize the image and/or a better characterization of the image than would a random sampling technique or a uniform sampling technique. Determining object or sensor placement using a Low Discrepancy sequence results in improved or optional coverage of an area with a minimal number of objects or sensors.

The following is an example of the generation or operation of a Low Discrepancy sequence (Halton set).

First, at step 1 the method selects the type of Low Discrepancy sequence, e.g., Halton, 2d (2-dimensional). In general, mathematicians are interested in nd applications of low-discrepancy sets where n > 10, sometimes n > 100. However, for a 2-dimensional application, a 2d sequence is used.

At step 2 the method then selects a criteria for construction of the Halton set, for example, construction in the unit square [0,1] x [0,1], it being noted that the general case can be derived by a scaling operation.

At step 3 the method then selects two prime numbers p and q. It is very common to use p = 2 and q = 3, although this is not necessary. Every pair of (p,q) results in a slightly different Halton set, wherein all of these sets are equivalent.

The variables (xₙ,yₙ) denote the nth element of the Halton set. Given n, at step 4 the method notates n in the p-ary system (in the case where p=2 it is the well-known binary system). The result is n = aₖ, ... a₁, a₀ where the a's are 0 or 1 in case of the binary system, but 0, 1, ..., p-1 in the general case.

At step 5, the method then reverses the order of aₖ, ... a₁, a₀. This results in a₀, a₁, ..., aₖ.

At step 6 the method then adds the (n-ary) point, i.e. 0.aₖ...a₁ a₀. This number is in between 0 and 1 and represents the x-component of the nth Halton point (xn,yn).

At step 7 the method repeats steps (4) - (6) based on the other number system q. This produces the y-component.

After steps 1 - 7, the nth point of the Halton sequence has been constructed.

The following is an example of the construction of a Low Discrepancy sequence in 2d. Here it is assumed that p = 2 and q = 3. This example determines the 10th element, i.e., (x₁₀,y₁₀).

The method starts with the x-component as follows:
(4') 10=1010 (decimal=binary) because 10=1*8+0*4+1*2+0*1
(5') reverse the order -> 0101
(6') add the point -> x10=0.0101 (0.0101 can be translated into 0*(1/2)+1*(1/4)+0*(1/8)+1*(1/16)=1/4 + 1/16 =5/16

Now the y-component is computed as follows:
(4") 10=101 (decimal=ternary) because 10=1*9+0*3+1*1
(5") reverse the order -> 101
(6") add the point -> y10=0.101 (0.101 can be translated into 1*(1/3)+0*(1/9)+1*(1/27)=10/27

Two important advantages of Low Discrepancy sequences are that 1) the generated sequence values are designed to maximally avoid each other, thus providing optional sampling and object placement; and 2) each additional element of the sequence may deliver the optimal location of the next element. In many cases, a relatively small number of samples may be sufficient to produce good approximations. These advantages will be seen as multiple embodiments of the image characterization and object placement methods are described.

For more information on Low Discrepancy sequences, please see "Numerical Recipes in Fortran 77: The Art of Scientific Computing" (ISBN 0-521-43064-X) Cambridge University Press, pgs. 299 - 306.

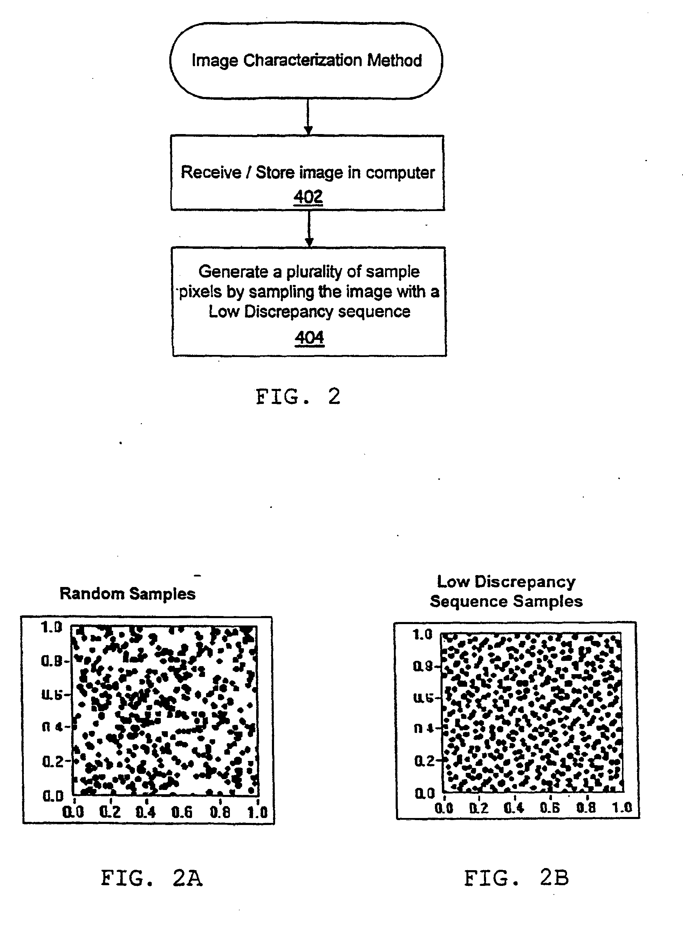

### Figure 2 - Image Characterization Method

Figure 2 is a flowchart illustrating an image characterization system and method for representing an image with a reduced number of pixel values according to the present invention. The method shown in Figure 2 may be used to characterize or represent an image for any of various different types of applications including, but not limited to, pattern-matching, image statistics, object location, image reconstruction, and motion estimation.

As shown, in step 402 an image is received by or stored in the computer system 102. The image may be received from any of various sources, as desired. For example, the image may be received over a network, or may have been previously stored on the computer. The image preferably comprises a plurality of pixels (or sub-pixels).

In step 404 the image is characterized or sampled to represent the image using less than all of the total image pixels. In other words, the image pixels are sampled according to a Low Discrepancy sequence, i.e., are sampled at pixel locations identified by a Low Discrepancy sequence. These sample pixels are stored in the computer system 102 and are useable to represent the image using a fewer number of pixels. In step 404, the computer 102 may operate to generate a Low Discrepancy sequence, and then sample pixels in the image based on the generated Low Discrepancy sequence.

The number of sample pixels generated may be selected by a user or may be selected by the computer according to some desired accuracy metric. In one embodiment, the computer 102 receives user input indicating the desired number of samples and/or the desired granularity, and the computer 102 generates at least one Low Discrepancy sequence based on the user input. This user input may be received before or after the image is received in step 402. Alternatively, the computer 102 has pre-calculated and stored a Low Discrepancy sequence which is used in sampling the image. In this instance, the computer 102 may select a number of sequence elements in a pre-calculated Low Discrepancy sequence based on received user input.

Figures 2A and 2B illustrate the difference between randomly selected sample pixels and sample pixels selected based on a Low Discrepancy sequence. The series of randomly selected sample pixels contains many clumps of sample pixels. Because each location is generated randomly, a random placement method does not take in to account prior random locations, and therefore, random sequences may not fill gaps appropriately. In contrast, the sample pixels generated by a Low Discrepancy sequence are positioned to maximally avoid one another. This means that each subsequent sample pixel location is placed in the largest available gap, achieving maximal avoidance by every sample pixel. In other words, every sample pixel is as far away from all other sample pixels as possible.

The image characterization system and method of the present invention may be used in a number of different applications, including various types of machine vision systems, e.g., industrial automation, robotic vision, traffic analysis, and image or video compression, such as MPEG compression, among others.

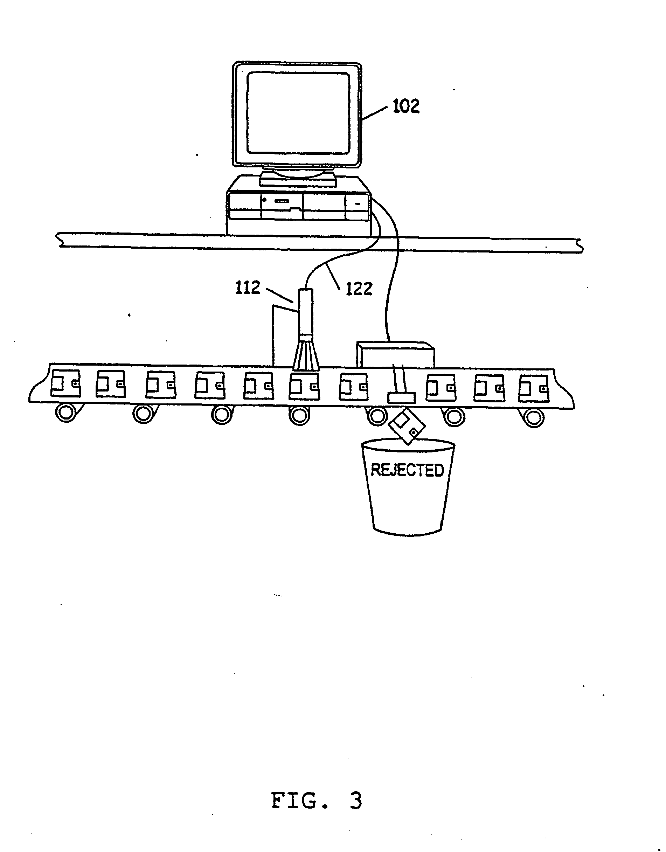

### Figure 3 - Machine Vision System

Figure 3 illustrates a machine vision application, wherein the computer system 102 is coupled to a camera 112 via cable 122 and operates to receive an image and perform image characterization and/or analysis. The computer system of Figure 3 may be programmed according to the present invention to characterize or represent a received image with a number of sample pixels, wherein the number of sample pixels is less than the total number of pixels in the image. The computer system 102 may also be programmed to perform other operations using the sample pixels, such as pattern matching, image statistic generation, image reconstruction, motion estimation, or object location. These techniques may be used in various types of machine vision applications. For example, the computer 102 may be embodied in various form factors and/or architectures, e.g., a robot or embedded device, among others. It is also noted that the image characterization, pattern matching, image reconstruction, object location, image statistic generation, and any other techniques of the present invention may be performed in any of various manners, either in software, programmable logic, or hardware, or a combination thereof.

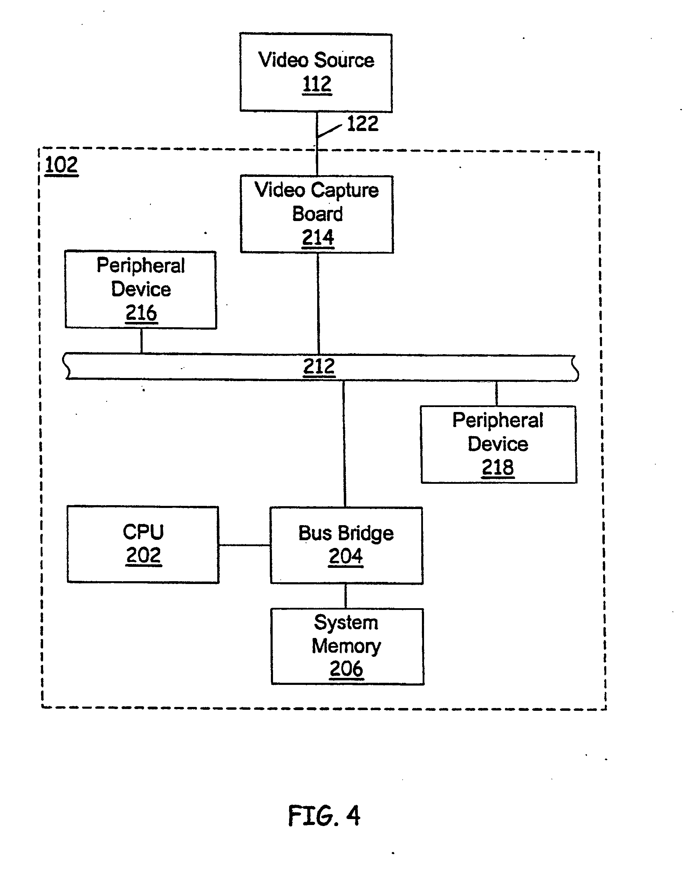

### Figure 4 - Video Capture System Block Diagram

Figure 4 is a high-level block diagram illustrating one system for acquiring an image for sampling. It is noted that the block diagram of Figure 4 is exemplary only, and other computer system architectures may be used as desired. The present invention may be implemented in a "smart camera", for example, which integrates a sensor, analog to digital (A/D) converter, CPU and communications devices together in a single unit. The present invention may be embodied in other devices, architectures or embodiments, as desired.

Figure 4 illustrates the host computer 102 coupled to video source 112. As shown in Figure 4, the host computer 102 may comprise a CPU 202, a bus bridge 204, system memory 206, and a peripheral bus 212. The CPU 202 is coupled to the bus bridge 204. The bus bridge 204 is coupled to the system memory 206 and the CPU 202, and couples to the peripheral bus 212. The peripheral bus 212 may be the PCI expansion bus, although other types of buses may be used.

In this embodiment, the host computer system 102 also includes a video capture board 214 which is adapted for coupling to the video source 112. The video capture board 214 is preferably coupled to the peripheral bus 212. In addition to the video capture board 214, other peripheral devices (216 and 218) may be coupled to the peripheral bus 212, such as audio cards, modems, graphics cards, network cards, etc.

The video source 112 supplies the digital video signals to the video capture board 214. The video capture board 214 transfers the digitized video frames to the system memory 206 through peripheral bus 212 and bus bridge 204. In this embodiment, the video capture board 214 acquires the target image and transfers the target image to system memory 206.

The system memory 206 may store an image or pattern, such as a template image or sample pixels generated from the template image. The system memory 206 also may store software according to the present invention which operates to generate Low Discrepancy sequences, such as Halton or Sobol sequences. The software may be executable to sample or characterize an image, perform pattern matching, acquire image statistics, reconstruct images, and perform motion estimates. The software may also be executable to determine object placement locations, create a mesh, and perform other applications using Low Discrepancy sequences . These applications are discussed further below.

The present invention is preferably implemented in one or more software programs which are executable by a processor or CPU. The software program(s) of the present invention are preferably stored in a memory medium, as described above, such as system memory 206.

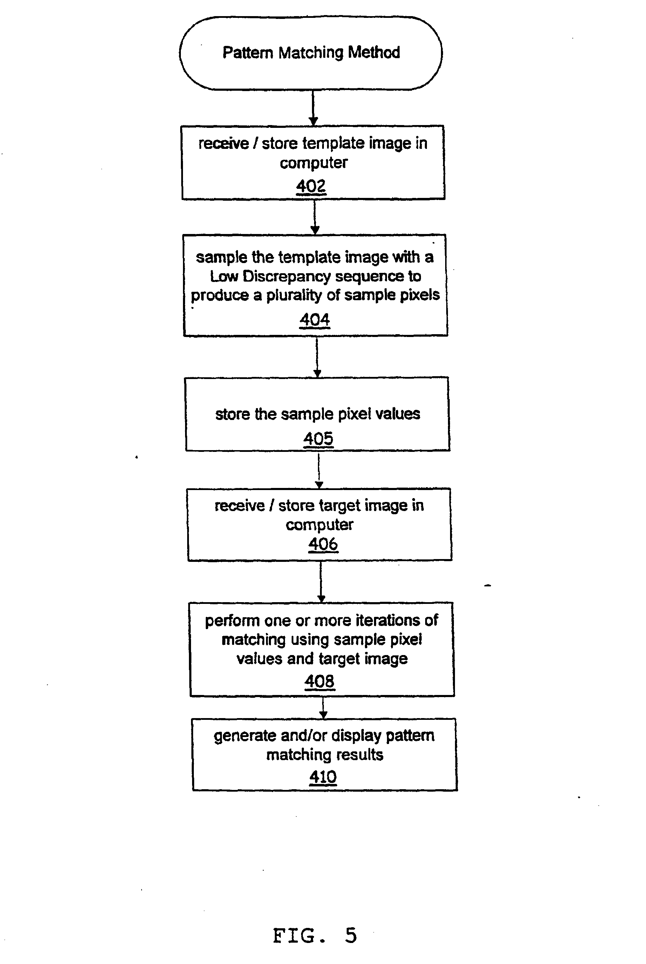

### Figure 5 - Pattern Matching Using Low-Discrepancy Sampling

Figure 5 is a flowchart diagram illustrating operation of a pattern matching method of the present invention. Pattern matching may be executed at a much more efficient rate and with fewer sample pixels using Low Discrepancy sampling methods rather than random or grid based sampling. The purpose of pattern matching is to find instances of a template image within a target image or region of interest (ROI). The present invention provides an improved method for performing pattern matching on a computer system 102.

In step 402 the computer receives and/or stores the template image in the computer, through video capture or any other method. In step 404 the template image is sampled using a Low Discrepancy sampling method, as described in figure 2. In other words, a Low Discrepancy sequence is generated or used in selecting pixels, referred to as sample pixels, which represent the image. The sample pixels are stored in the computer memory in step 405.

In step 406 the target image is received and/or stored in the computer system. In the embodiment of Figure 3, the target image is received from the camera 112. However, as noted above, the target image may be received from any of various sources, as desired. The target image is usually significantly larger than the template image.

In step 408 pattern matching is performed using the sample pixels stored in memory in step 405 to find zero or more instances of the template image in the target image. In the preferred embodiment, the sample pixels determined in step 404 are iteratively compared with selected portions of the target image, preferably using a 2D correlation technique, to find matches and hence to determine instances or locations of the template image in the target image. The pattern matching may use a computed step size to step across the image and/or use a coarse to fine search method for improved efficiency.

In another embodiment, this method of step 408 is implemented using a series of iterations beginning with an iteration using a coarse template (i.e. less sample pixels) and subsequently performing iterations using an increasingly fine (i.e. more sample pixels) template. Possible matches are preferably stored in memory so that future iterations may apply the more fine template samples to only those areas, instead of the entire target image. This allows a quick response as to possible matches, while still allowing more precise matches to be determined. In this embodiment, a user may be able to view the results of each subsequent iteration and determine when the desired degree of certainty is met.

In many applications, it is necessary or desired to perform the pattern matching in real time when the target image is acquired. In machine vision applications, "real time" often refers to "video real time", i.e., to performing the function for every single image acquired by the camera, e.g., for a NTSC camera that acquires 30 frames/second. For example, in the machine vision embodiment shown in Figure 3, the pattern matching is preferably performed in real time when the target image is acquired by the camera 112. However, in these real time embodiments, the template image is typically pre-stored in the computer 102, and there is generally a large amount of time in which to characterize or process the template image to produce the sample pixels. Once the sample pixels have been generated, the system can perform the pattern matching method a plurality of times for a plurality of acquired target images, preferably in real time. Thus, the sample pixels may be generated and stored in steps 404 and 405 prior to receipt of the target image in step 406.

In step 410 the pattern matching results are generated, preferably providing an indication of the location(s) of the template image in the target image. The pattern matching method may also provide information on the orientation, size, and other information of the located template image.

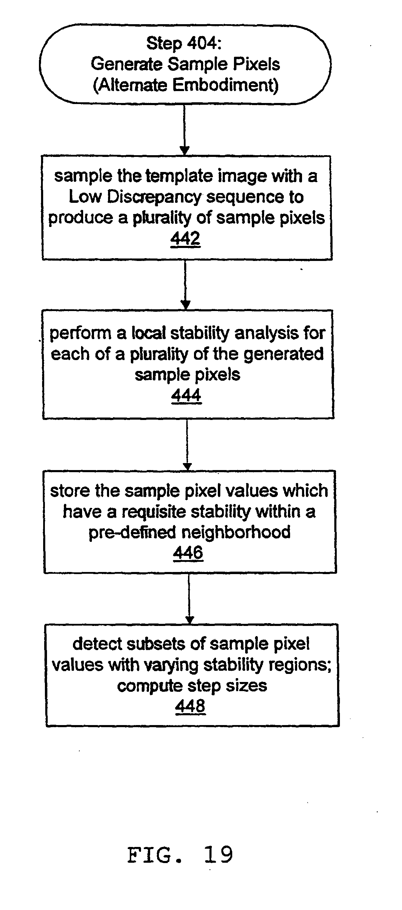

It is noted that steps 406-410 may be performed a plurality of times for a plurality of acquired target images. For more information on various pattern matching methods, please see the description relating to Figures 19-28.

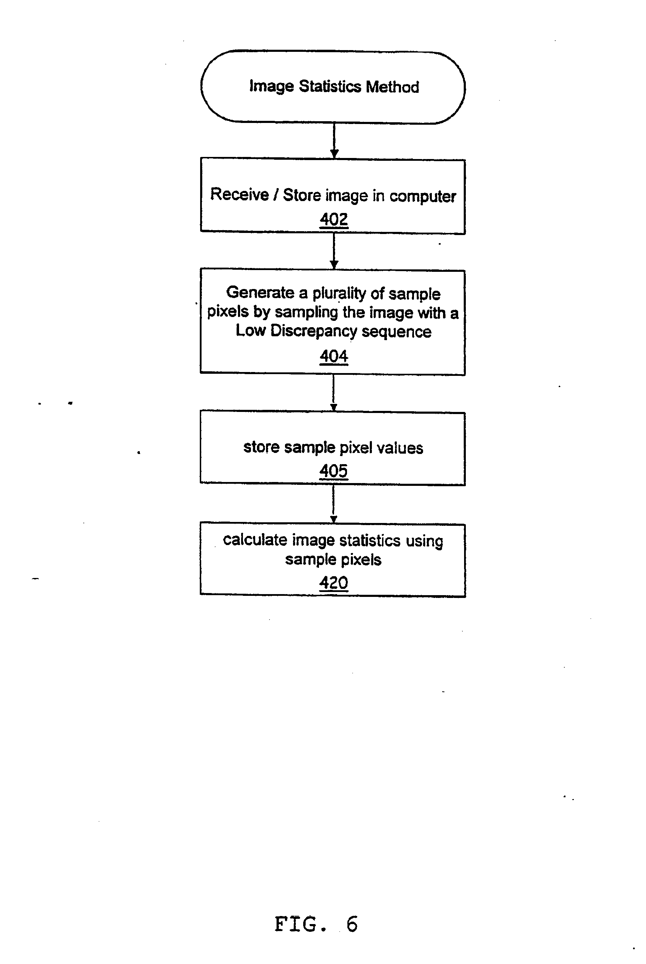

### Figure 6 - Acquiring Image Statistics Using Low Discrepancy Sampling

Computing the statistics of an image, such as the mean gray-level or standard deviation of gray-levels in an image, is an integral part of many image processing and machine vision applications. Other types of image statistics are required and/or necessary for different applications. The present invention provides an improved method of acquiring image statistics using a reduced number of sample pixels which characterize the image.

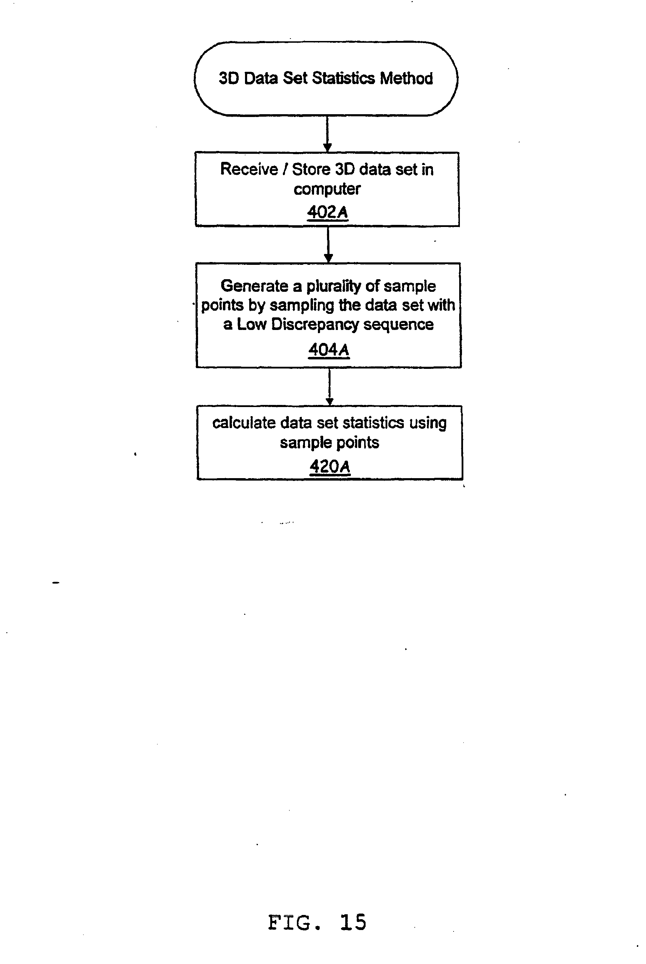

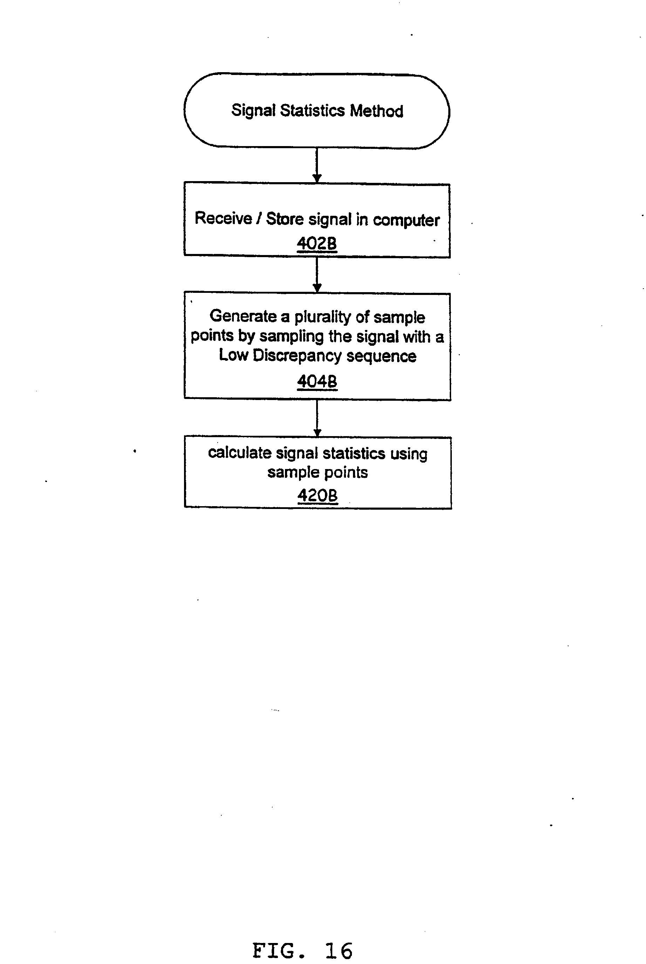

Figure 6 is a flowchart illustrating one embodiment of producing image statistics for an image. As shown in Figures 15 and 16, discussed below, the same method may be applied or adapted for generating image statistics for a 3-D image or other 3-D volume or 3-D data set, or for a 1-D data set, such as a signal. The present invention may also be readily extended to other n-dimensional data sets.

In step 402 of Figure 6, the computer 102 receives and stores an image in the computer, through video capture or any other method. The image may be received over a network, or may have been previously stored on the computer, such as by a user. In the case of a 1-D, 2-D, 3-D or n-D data set, the data set is received and stored in step 402A (Figures 15 and 16).

In step 404 the image is sampled using a Low Discrepancy sampling method, as described above. The sample pixels are stored in memory in step 405. The number of sample pixels generated may be selected by a user or may be selected by the computer according to some desired accuracy metric. In the case of a 1-D, 2-D, 3-D or n-D data set, the data set is sampled in step 404A (Figures 15 and 16) to produce a plurality of sample points which characterize the data set. These sample points are stored in the computer 102.

In step 420 the sample pixels are used to compute various image statistics. More specifically, the computer 102 uses the sample pixels to compute various image statistics according to various statistical gathering algorithms. This embodiment allows the desired pixel or image information (e.g., color, shading, perspective, etc.) to be obtained from the sample pixels, instead of requiring all of the image pixels to be used for this purpose. Because a reduced number of strategically selected sample pixels are used (i.e., sample pixels selected using a Low Discrepancy sequence rather than a grid based, random, or any other selection method), the method's efficiency is improved. In the case of a 1-D, 2-D, 3-D or n-D data set, data set statistics are computed using the sample points in step 420A(Figures 15 and 16).

In the absence of Low Discrepancy sampling, either grid-based or random sampling would likely be used to determine sample pixels or points for statistical gathering purposes. Experimental data has been recorded in reference to statistics gathered representing the gray-level in an image using each of these sampling techniques. The experimental data shows that the deviation from real gray-level is always less when sample pixels are selected using a Low Discrepancy sequence rather than grid based algorithms or random selection. Thus, a Low Discrepancy sequence produces better results than grid-based or random selection.

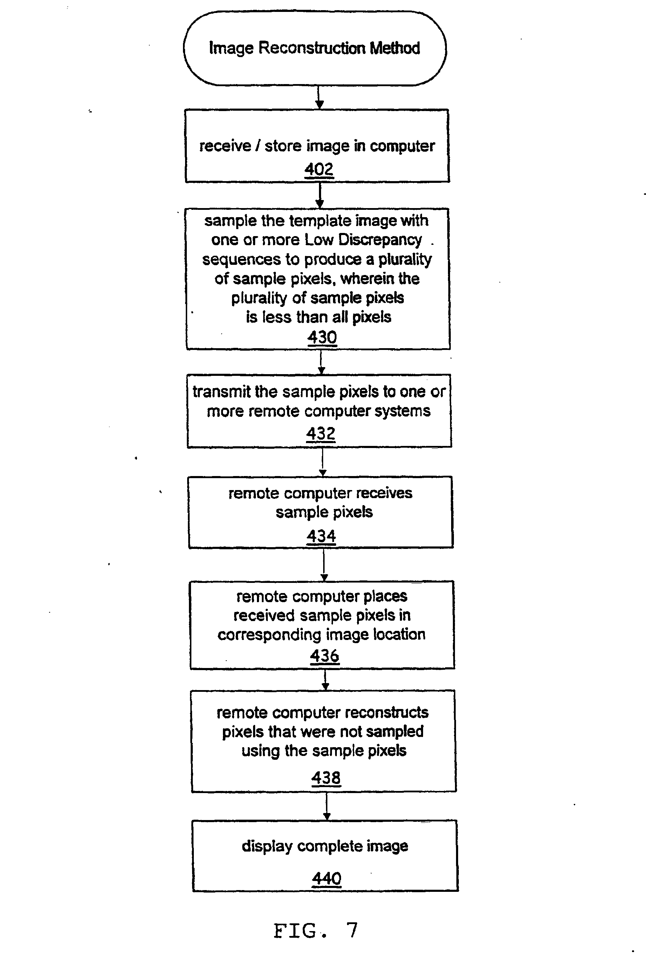

### Figure 7 - Reconstructing Images Using Low Discrepancy Sampling

Image reconstruction refers to the process of estimating the values of certain pixels based on the values of a given set of pixels in the image. Applications that require fast transmission of image/graphic data often choose to send less than all of the pixels in an image due to slow transmission speeds. By selecting the best pixels to sample and send, i.e., the subset of pixels which optimally characterize the image, the quality of an image may be greatly improved. The receiving computer system receives the sample pixels and may operate to "fill in the blanks" using surrounding pixel data. This means that if the sample pixels maximally avoid each other, the sample pixels will more accurately characterize or represent the image, and the reconstructed image will look more like the original image.

Figure 7 is a flowchart illustrating one embodiment of a image reconstruction method. In step 402 an image is received and/or stored by a computer. In a teleconferencing or other similar application, the image may be received from a video camera connected to the computer 102. The computer 102 may also be a web server which stores images for transmission over the Internet.

This image is then sampled in step 430 using a Low Discrepancy sequence. In one embodiment, a plurality of different Low Discrepancy sequences may be used, each for different parts of the image. Thus, portions of the image with more detail, such as a face, can be sampled with a larger number of samples, and portions of the image with less detail can be sampled with a fewer number of samples. Other compression techniques may also be performed on the sample pixel data to increase transmission time.

In step 432 the sample pixels are transmitted to one or more remote computers. For example, the sample pixels may be transmitted over a network, such as the Internet, using any of various transmission protocols.

In step 434 the sample pixels are received by a remote computer. The sample pixels are generally accompanied by coordinate information indicating the location of each sample pixel within the image. Alternatively, the receiving computer may generate the same Low Discrepancy sequence as the transmitting computer to determine placement of the sample pixels. This would avoid the requirement of the server or transmitting computer having to transmit coordinate information with the sample pixels.

In step 436 the remote computer places the sample pixels in their appropriate locations, such as in a frame buffer.

In step 438 the computer executes an algorithm to fill the pixels that were not received into the frame buffer. The most common method of reconstructing a missing pixel is by averaging each of the pixels around its perimeter, but any other reconstruction method may be used. After the pixels that were not transmitted are reconstructed, in step 440 the computer 102 displays the complete image (i.e. the combination of the received sample pixels and the reconstructed remainder pixels).

The remote computer may begin to refresh the display from the frame buffer as soon as any of the sample pixels are received. As more sample pixels are received and/or reconstructed, the clarity of the image increases.

Reconstruction may also be performed for pixels, or groups of pixels, that were sampled, but were lost or delayed in transmission. For example, in the case of video transmission over the Internet or other network, there is a possibility that packets of image information will be lost, corrupted, or more likely will not reach the destination in time to be used by real time video processors. Nevertheless, the image data that was lost may be reconstructed by estimating the values of the missing pixels. This estimation is typically based on the pixel information of surrounding pixels or the image as a whole. In a real time environment, a method that requires sampling of every pixel may be too slow to use. Therefore a method that provides substantially similar results while saving computer cycles is desirable. The sampling may be performed on the image as a whole or a specified image portion (depending on the specific application) using a Low Discrepancy sequence in order to obtain image information that may be used to reconstruct missing portions of the image. The sampled data may be used to determine an average image color, or any other pixel attribute, which may be used in replacement of missing pixels.

In yet another embodiment, an image may be sent in a pixel-by-pixel format using sample pixels generated by a Low Discrepancy sequence. In other words, the pixels may not be transmitted in a scan line format, e.g., left to right and top to bottom, but rather are transmitted according to a Low Discrepancy sequence ordering. In this embodiment, all of the image pixels may also be sample pixels. The order of sample pixel selection and transfer is determined by a Low Discrepancy sequence. For example, an image being sent across the Internet, pixel-by-pixel (or groups of pixels), is received by a remote computer. As each sample pixel is received, the sample pixel is stored in the frame buffer. On each screen refresh, the current content of the frame buffer is rendered, and the remote computer generates an intermediate or granular representation of the image. Because the pixels maximally avoid one another, at any time during the transfer, the received sample pixels provide the optimal information for viewing or digitally analyzing the image, based on the amount of data received. In other words, according to this embodiment, an image appears according to locations selected by a Low Discrepancy sequence. This may provide the remote user with image information on the entire image more efficiently or more quickly. This embodiment may also provide the best representation of an image where the pixel-by-pixel data was interrupted or stopped. In addition, reconstruction of the received image may be performed in parallel with reception of the sample pixels. In this embodiment, as more pixel samples are received, the received sample pixels may actually overwrite reconstructed pixels.

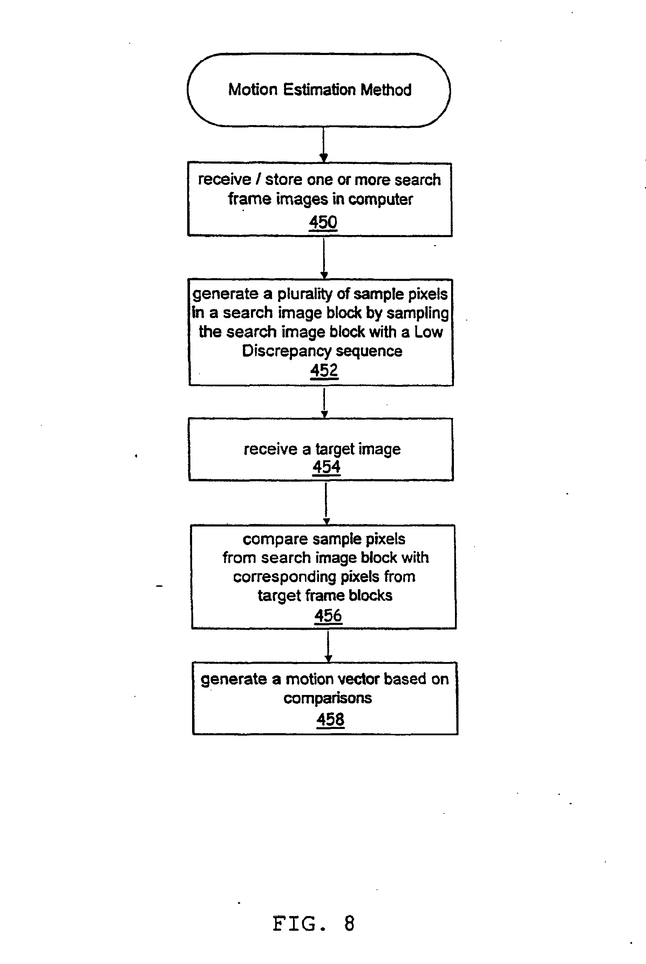

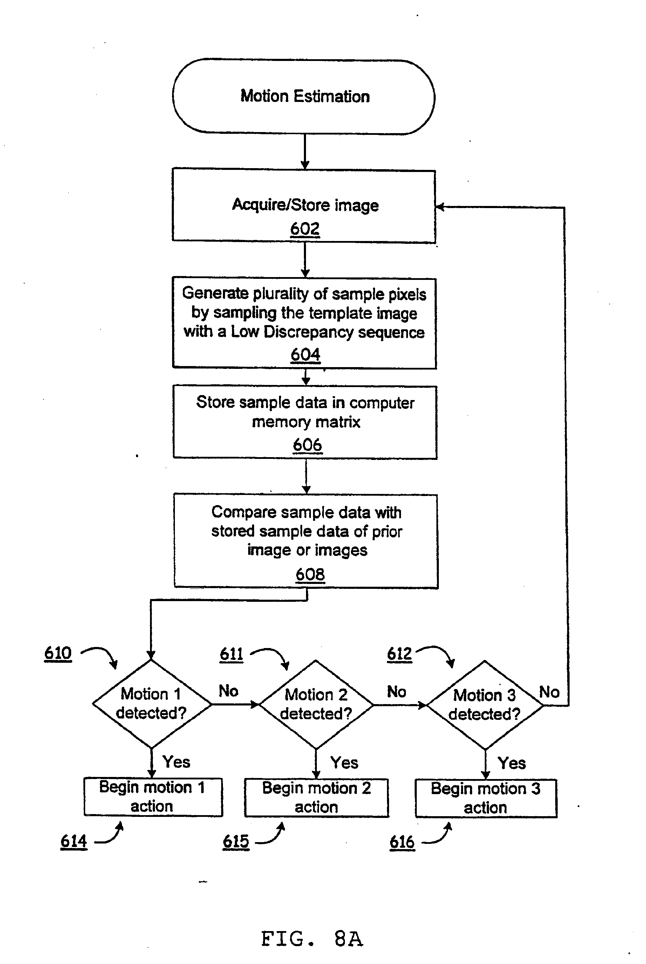

### Figure 8 -Motion Estimation Using Low Discrepancy Sampling

Motion estimation is used in various fields, including the field of compression/decompression of video images. One compression method, which is used in MPEG compression, involves the use of motion vectors. The method is implemented by dividing an image into search blocks. Each search block is compared to blocks of a target image (usually the previous and/or subsequent image in the video sequence) to find the closest match. Once the closest match is found, a motion vector is created to reflect the motion of that particular block. The motion vector is transmitted in place of the search block. Motion vectors may hence be used in the video sequence to compress frames in the video sequence. Other effects may also be applied to the block to indicate changes in color, shade, lighting, etc. Comparing every pixel of a search block to every pixel of the blocks in a target image may be very time and power consuming. A method for reducing computing cycles and time needed to generate motion vectors is desired.

Low Discrepancy sequences may be used to select certain pixels of a search image block to compare with the corresponding pixels of target frame blocks. Figure 8 illustrates an improved method of generating motion vector using Low Discrepancy sequences.

In step 450 a computer receives and stores one or more search frame images. Each search frame image may comprise multiple search frame blocks. The search frame blocks may be macroblocks of a image being compressed according to the MPEG standard.

In step 452 a search image block is sampled using a Low Discrepancy sequence. This generates a number of sample pixels of the search image block that is less than the total number of pixels in the search image block. As described above, these sample pixels optimally characterize the search image block for the number of sample pixels used.

A target image is then selected or received in step 454. The target image is generally a prior or subsequent frame to the search image. The target image includes various image blocks that will be compared to the search image block to determine the best match.

The sample pixels from the search image block are then used to compare with various target image blocks from the target image in step 456. Once the closest match has been located within the target frame blocks, in step 458 a motion vector is generated which encodes this information. This process may be repeated for every search image block. This method can be used to create motion vectors more quickly than conventional methods.

An alternative embodiment of motion estimation is used in machine vision systems. In many applications it is necessary for a machine vision system to cope with moving and changing objects, changing illumination, and changing viewpoints, as the application requires information extracted from a dynamic environment. A sequence of image frames contains much more information to the understanding of a scene, but at the expense of larger amounts of data to be processed. Estimating the motion of objects or the scene in successive acquired images is therefore desirable. Since motion estimation is most valuable if done in real-time, if every pixel of two sequential images is compared, the data processing load is tremendous and may produce useless delayed results due to computational lag or require a higher delay time between images. Therefore, utilizing sample pixels of acquired images may give an accurate analysis of changing conditions while minimizing precious computer cycles. Historically, images were sampled using grid based patterns or random patterns. Using Low Discrepancy sequences, however, provides improved results, or provides the same results while requiring fewer sample pixels to be used.

One embodiment of motion estimation is illustrated in the flowchart of figure 8A. In step 602 an image of the pertinent scene or object is acquired. This image is sample in step 604 using a Low Discrepancy sequence. The sample data may be stored in a memory matrix 606 so it may be referred to by future comparison operations. A storage matrix is preferred if comparisons are to be made between more than directly neighboring images. The stored sample data is compared to prior image data to determine if certain motions have occurred or are expected to occur. Steps 610-612 allow a plurality of motions to be detected or anticipated and to make the appropriate adjustments (614-616). This sequence is repeated, beginning at step 602 by acquiring the next image, as long as necessary. This method may be implement, but is not limited to, the fields of robot navigation, autonomous vehicles, video coding, obtaining the structure of objects from motion, and tracking objects.

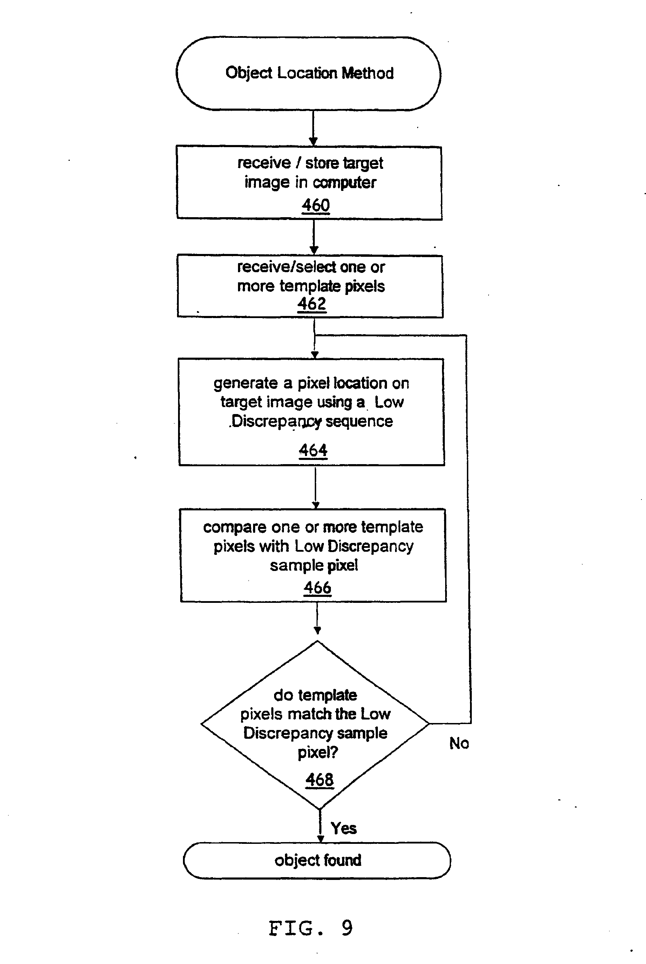

### Figure 9 - Object Location Using Low Discrepancy Sampling

Object location refers to the process of quickly locating the position of a known object in an image. For example, finding the location of a black square on a white background. Assuming an ideal black square (i.e. all black pixels are connected and there are no gaps between black pixels), the task can be accomplished by finding one black pixel, from which the location of the complete square can be determined.

Figure 9 illustrates the process of object location. In step 460 the target image (the image to be searched) is acquired and stored in the computer. In step 462 one or more template pixels are acquired and/or selected. In the example of a search for an ideal black square, the template pixel may be a single black pixel. It is noted that step 462 may occur before or after step 460.

In step 464 a location on the target image is generated using a Low Discrepancy sequence. In step 466 the template pixel information (a black pixel in the example) is compared to the pixel information at the generated location on the target image. In step 468 the method then determines if the pixel information matches. If so, the object from which the template pixel was taken has been found. If there is no match, step 464 generates a new location on the target image using the Low Discrepancy sequence and the comparison process of steps 464 and 468 is repeated.

It is noted that the method described above can be easily modified for more complex object location problems.

When this method was tested using Halton and Sobol Low Discrepancy sequences, both out-performed random and grid based sequences when locating an ideal black box on a white background. While experimental results state that Halton and Sobol sequences prefer the two main orientations in the x and y direction, even if the box is rotated, the Low Discrepancy sequences still perform better than both random sequences and grid based sets.

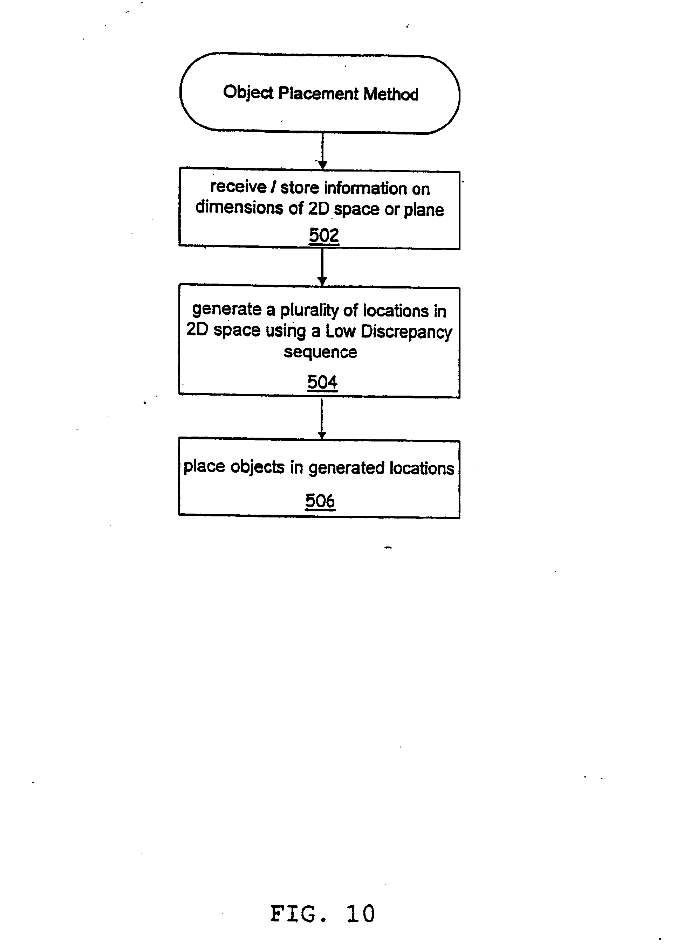

### Figures 10, 11 and 14 - Determining Locations for Object/Sensor Placement Using Low Discrepancy sequences

An application that requires the placement of objects for best coverage of an area, and/or which requires great effort in placing additional objects, and/or which requires considerable resources in the moving / setting up of objects, may benefit by the use of Low Discrepancy sequences for determining the placement of such objects. For example, in many applications multiple sensors are required, such as in a 2D array or 3D volume, to cover the area and receive signals in the area. Therefore, a method for placing sensors optimally in the area may allow a measurement to be completed with fewer sensors than required by a grid based placement.

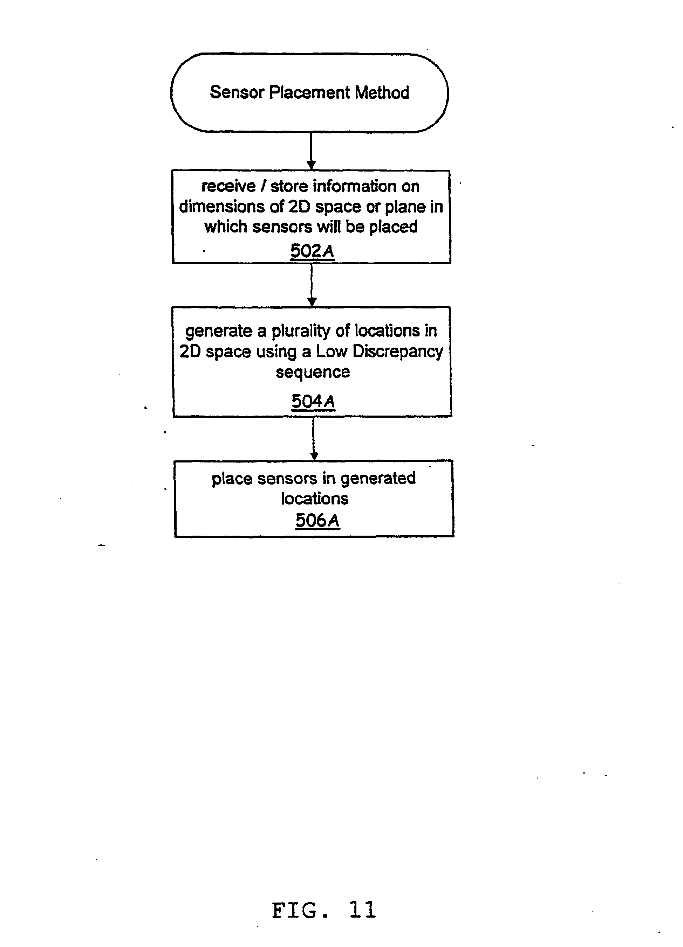

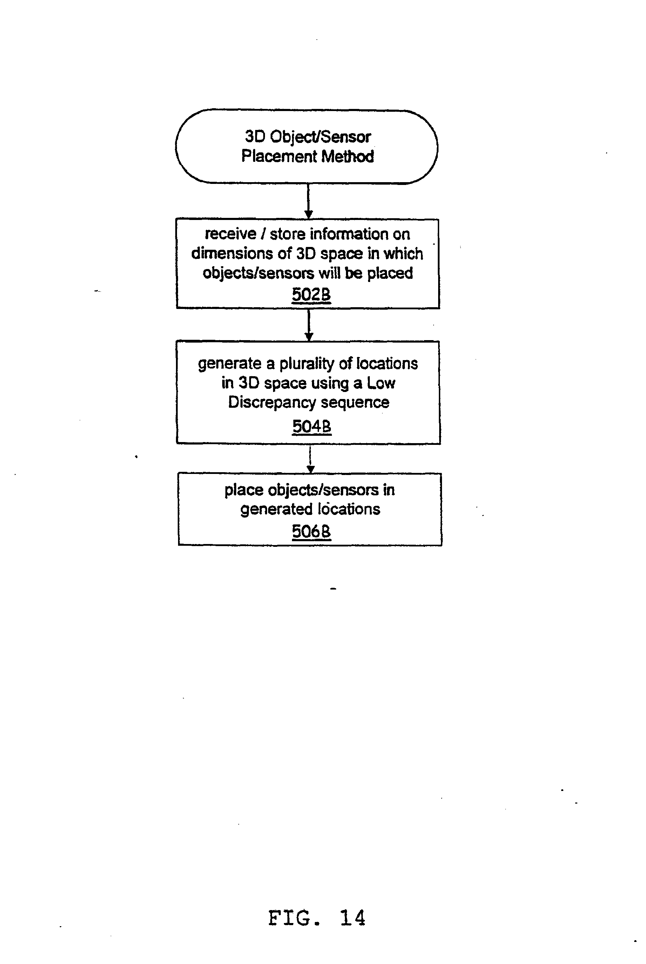

Figure 10 is a flowchart illustrating a method of placing objects within a determined spatial area (e.g., a 2D area) using a Low Discrepancy sequence. Figure 10 illustrates that the method of the present example may be used for placing or locating any of various types of objects using a Low Discrepancy sequence. Figure 11 is a flowchart illustrating a method of placing sensors within a determined spatial area using a Low Discrepancy sequence. For example, the sensors may be temperature sensors, pressure sensors, electrical sensors, microphones, transmitters, receivers, radar receivers, sonar receivers, and any other type of sensor or transducer. Figure 14 illustrates the method of placing objects or sensors within a 3-dimensional volume using a Low Discrepancy sequence. Each of Figures 10, 11 and 14 is described below.

As shown in Figure 10, in step 502 the method first receives the dimensions of the 2-dimensional area (or 3D volume or 1D space) in which the object (or sensor) will be placed. Where the object is a sensor, the method receives information regarding the 2-D area or 3-D volume in which the sensor can be placed in step 502A (Figure 11). In the case of a 3-D application, the method receives information regarding the 3-D volume in step 502B (Figure 14). This information may be received from a user or may be generated by the computer 102 in response to other information.

In step 504 (or steps 504A or 504B) the method generates placement locations in the 2-D space (Figure 10) or 3-D volume (Figure 14) using a Low Discrepancy sequence. The number of values or elements in the Low Discrepancy sequence corresponds to the determined number of objects or sensors to be placed. Step 504 may involve generating the Low Discrepancy sequence, wherein the sequence indicates or specifies the placement locations. If the objects or sensors are being placed in a 2-D area, as in Figures 10 and 11, the method generates a 2-D Low Discrepancy sequence. If the objects are being placed in a 3-D area, as in Figure 14, the method generates a 3-D Low Discrepancy sequence. Alternatively, the Low Discrepancy sequence may have been previously generated and stored.

In step 506 (or steps 506A or 506B) the objects or sensors are then placed in the generated or determined locations. The objects or sensors may be placed using robotics or other types of machinery, or may be placed by a human. For example, in the manufacture of a sensor comprising a number of sensor elements, robotics or machinery may manufacture the sensor with the sensor elements placed in the locations generated by the Low Discrepancy sequence. Alternatively, if the majority of possible object locations will be filled with objects, a smaller Low Discrepancy sequence may be generated to determine where objects will not be placed. The objects, placed according to the Low Discrepancy sequence, may provide improved results as compared to a system using objects placed in a grid based or random pattern.

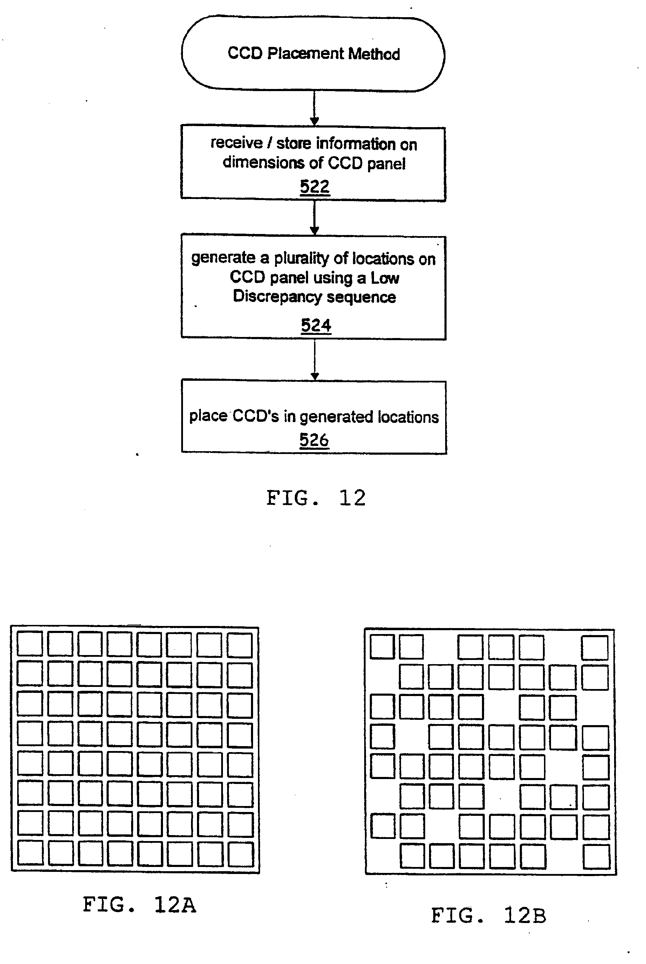

### Figure 12 - CCD Placement Method

A Charge-Coupled Device (CCD) sensor is one example of the use of the sensor placement method. A typical CCD sensor, such as in a camera, is actually an array of CCD sensor elements. These sensor elements are typically combined in a grid based pattern, as shown in figure 12A. A grid based pattern placement of these sensor elements may provide accurate results, but considering the cost of the sensor elements, it is desirable to utilize fewer sensors than required by a grid based placement, while still providing similar or better effectiveness. Alternatively, it is desirable to utilize the same number of sensors as a grid based placement, while providing improved results. According to the present invention, the CCD sensor elements may be placed or configured according to a Low Discrepancy sequence.

Figure 12 is a flowchart diagram illustrating placement of the individual sensor elements of a CCD using a Low Discrepancy sequence. The method operates by first receiving the dimensions of the CCD panel from the user in step 522. In step 524 placement locations are generated using a Low Discrepancy sequence comprising a determined number of sequence elements or results (the number of sensor elements to be used). Here the computer 102 generates a Low Discrepancy sequence, and then determines placement locations using the Low Discrepancy sequence. The sensor elements are then placed in the optimal locations in step 526. The sensor elements may be placed by the user or by machinery during manufacture of the CCD panels. The sensor elements, placed according to the Low Discrepancy sequence, provide better results than a system which uses sensor elements in a grid based pattern.

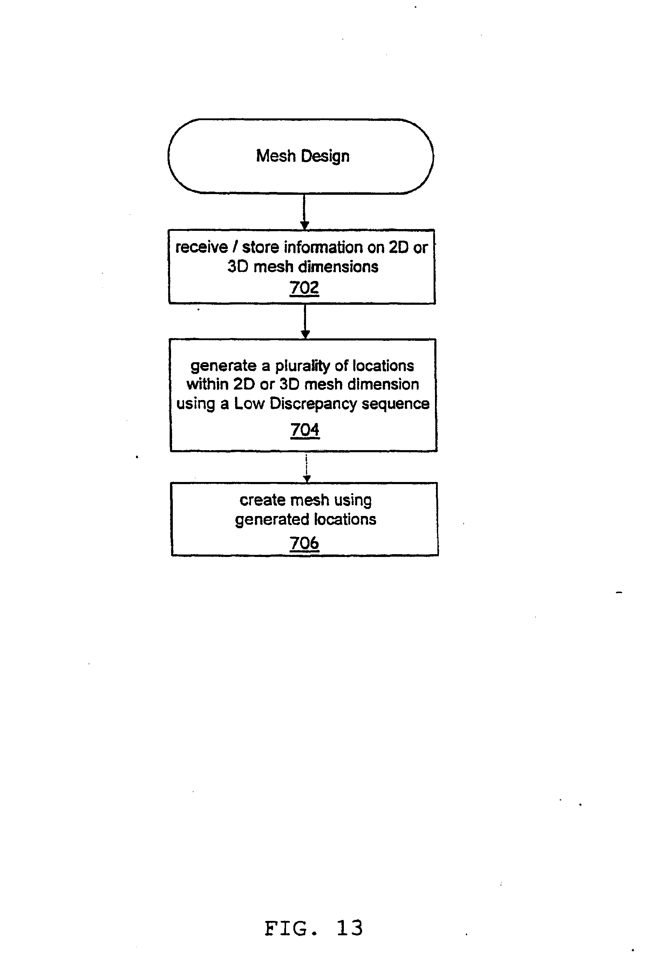

### Figure 13 - Mesh Design Using Low Discrepancy Sequences

Meshes are used by many engineering applications including mechanical, structural, and design applications. Prior art typically uses a grid based mesh. If a mesh could be generated using less vertices, while achieving substantially the same results, efficiency my be increased. In addition, it would also be desirable to generate a mesh.with improved results over a grid based mesh. Therefore an improved method for determining mesh vertices is desired.

Figure 13 illustrates a method for creating meshes using Low Discrepancy sequences. In step 702 the computer receives the dimension of either a 2D or 3D mesh. In step 704 the vertex locations are generated, within the 2D or 3D dimensions, by a Low Discrepancy sequence. These vertices are then combined in step 706 to create a full mesh of the desired dimension.

### Figures 15 and 16 - Acquiring Data Set Statistics Using Low Discrepancy Sampling

Computing the statistics of a data set, such as a 1-D, 2-D, 3-D or n-D data set, is often required. For example, computing the statistics of a signal may be an important aspect of many applications involving signals from sensors. For example, a voice recognition system is required to produce statistics regarding a voice signal in order to build a database from which to match future voice data. Theses signal are typically acquired as a voltage signal from a microphone and stored in the computer memory. If a fewer number of signal samples are stored in memory, the recognition process may be faster and more efficient. Low Discrepancy signal sampling may also by used in any application dealing with sound, vibration, acceleration, spectral matching, signal matching, frequency estimation, and dynamic signal measuring.

Figures 15 and 16 are flowcharts illustrating embodiments of producing statistics for a data set. The same method may be applied or adapted for generating statistics for any type of n-D data set, such as a 2-D or 3-D image, a 3-D volume or other 3-D data set, or for a 1-D data set, such as a signal. The present example may also be readily extended to other n-dimensional data sets. Figures 15 and 16 are described together bellow.

In step 402A of Figure 15, the computer 102 receives and stores a data set in the computer. The data set may be received over a network, or may have been previously stored on the computer, such as by a user. In the case of a 1-D data set, e.g., a signal, the signal is received and stored in step 402B (Figure 16).

In step 404A of Figure 15, the data set is sampled using a Low Discrepancy sampling method. The sample points are preferably stored in memory. The number of sample points generated may be selected by a user or may be selected by the computer according to some desired accuracy metric. In the case of a 1-D data set, e.g., a signal, the data set of the signal is sampled in step 404B (Figure 16) to produce a plurality of sample points which characterize the signal.

In step 420A the sample points are used to compute various data set statistics. More specifically, the computer 102 uses the sample points to compute various statistics according to various statistical gathering algorithms. This embodiment allows the desired statistical information to be obtained from the sample points, instead of requiring all of the data set points to be used for this purpose. Because a reduced number of strategically selected sample points are used (i.e., sample points selected using a Low Discrepancy sequence rather than a grid based, random, or any other selection method), the method's efficiency is improved. In the case of a 1-D data set, e.g., a signal, data set statistics are computed using the sample points of the signal in step 420B (Figure 16).

In the absence of Low Discrepancy sampling, either grid-based or random sampling would likely be used to determine sample points for statistical gathering purposes. Experimental data has shown that a Low Discrepancy sequence produces better results than grid-based or random selection.

### Figure 19 - Sampling of the Template Image

Figure 19 is a flowchart diagram illustrating an alternate embodiment of the template characterization or representation performed in step 404 of Figure 5. The flowchart of Figure 19 thus illustrates an alternative method for representing an image, such as a template image, with a reduced number of sample pixels which accurately characterize the image.

As shown, in step 442 the image is sampled to produce a plurality of sample pixels which represent the image. In this embodiment, the template image may be sampled using any of various sampling techniques, such as a uniform sampling technique, i.e., a uniform grid based sampling, a random sampling sequence, or using Low Discrepancy sequences such as the Halton or Sobol sequence as described with respect to step 404 of Figure 5. In the preferred embodiment, a Low Discrepancy sequence is used to sample the image because the Low Discrepancy sequence produces the fewest sample pixels or points which accurately characterize the image.

After the sampling of the image has been performed to produce a plurality of sample pixels, in step 444 a local stability analysis is performed for at least a subset of and preferably for all of the generated sample pixels to determine stability of the respective sample pixels to spatial perturbations. For each candidate sample pixel value for which this local analysis is performed, the method operates to determine a neighborhood around the respective candidate sample pixel where the template image pixel values comprised in the neighborhood correlate highly with the candidate sample pixel value. In other words, for each candidate sample pixel value for which the local stability analysis is performed, a correlation is performed with neighboring pixel values within the template image to determine if the candidate sample pixel value is stable within its neighborhood, i.e., the neighboring pixel values have similar or correlated values with the respective candidate sample pixel value.

In step 446 the method optionally operates to save only those candidate sample pixel values which have a requisite stability within a predetermined or predefined neighborhood size. Sample pixel values generated in step 442 which are not stable within the pre-defined neighborhood are preferably thrown out or not used. Thus, this method operates to further reduce the number of sample pixel values used in the pattern matching operation. Stated another way, the method shown in Figure 19 operates to represent an image, such as a template image used in pattern matching, with an even further reduced number of sample pixel points.

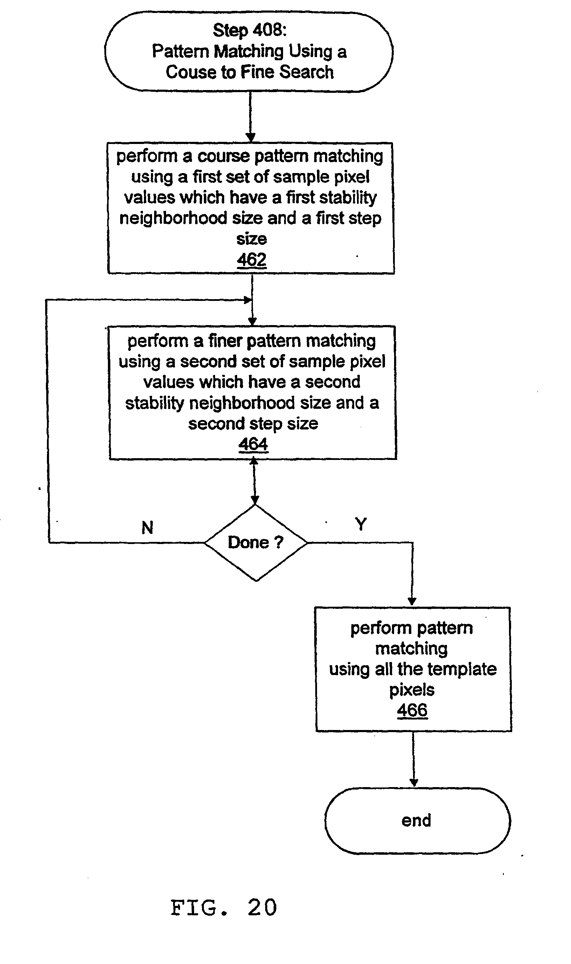

In one embodiment of the invention, described below with respect to Figure 20, after either of steps 444 or 446, in step 448 the method further operates to find or detect different respective stability regions or neighborhood sizes for which each of the respective subset or all of the sample pixel values are stable, according to a stability criteria or varying stability levels. Stated another way, the method operates to detect and categorize subsets of sample pixel values with varying stability regions, i.e., operates to categorize subsets of sample pixel values according to stability region size.

The different stability region sizes may also be used to determine a step size for stepping the respective sample pixels across the target image in the pattern matching process. This step size is used during the pattern matching operation to reduce the number of correlations required to be performed in the pattern matching. Thus, for a set of sample pixel values which have a larger stability neighborhood size, the set of sample pixel values can be stepped across the target image during the iterative correlation process with a larger step size. A set of sample pixel values with a smaller stability neighborhood size are stepped across the target image during the iterative correlation process with a correspondingly smaller step size.

As described below with respect to Figure 20, in the subsequent pattern matching process, the sample pixel values having different stability neighborhood sizes are then used in a coarse to fine search, preferably using the respective computed step sizes. Thus the method operates to determine different stability neighborhood sizes and corresponding step sizes for use in a coarse to fine pattern matching search.

As described above, in machine vision applications, generally a large or infinite amount of time is available for characterizing the template image. In contrast, when the target image is obtained, it is generally desirable for the pattern matching to occur as quickly as possible. Therefore, a relatively large amount of processing may be performed to characterize or represent the template image, including sampling the template image using Low Discrepancy sequences, local stability analysis for each of the sample pixel values and computation of desired step sizes. This pre-processing is not required to be performed in real time. Rather this pre-processing of the template image is performed to enable a faster pattern matching computation when the target image is acquired.

### Figure 20 - Pattern Matching Using Computed Step Sizes and Coarse to Fine Searching

Figure 20 is a flowchart diagram illustrating one embodiment of the pattern matching process performed in step 408 of Figure 5. The flowchart of Figure 20 illustrates pattern matching using different stability neighborhood sizes and corresponding step sizes in a coarse to fine search. Steps which are similar or identical with those in Figures 5 and 19 have the same reference numerals for convenience.

As shown, in step 462 the method operates to perform a coarse pattern matching using a first set of sample pixel values which have a first stability neighborhood size and a corresponding first step size. Thus the method performs a first iteration of pattern matching using the first set of sample pixel values and the first step size. The first set of sample pixels used for the initial coarse pattern matching preferably have the largest stability neighborhood size and hence the largest step size. This coarse pattern searching produces zero or more possible locations for the template image in the target image. In other words, this coarse pattern searching produces zero or more candidate locations in the target image which possibly include the template image.

After step 462, in step 464 the method operates to perform a finer pattern matching at these possible locations or candidate locations using a second set of sample pixel values which have a second stability neighborhood size and a corresponding second step size, wherein the second stability neighborhood size and the second step size are smaller than the first stability neighborhood size and first step size. This finer pattern searching produces zero or more possible locations for the template image in the target image, and typically involves discarding one or more false matches produced in the coarse search performed in step 462.

Step 464 may be repeated one or more times to perform even finer pattern matching using other sets of sample pixel values which have even smaller stability neighborhood sizes and corresponding second step sizes. Step 464 is preferably repeated at the remaining candidate locations. After one or more iterations of step 464, the method may involve performing a final pattern matching in step 464 using all of the sample pixel values to determine if any remaining possible matches are actual matches. Alternatively, after one or more iterations of step 464 and/or after a pattern matching step using all of the sample pixel values, in step 466 the method further optionally performs a pattern matching using all of the template pixels for the remaining candidate locations in the target image. The number of iterations that are performed in step 464 depends on the degree of desired preciseness in the pattern matching. In a similar manner, the decision whether step 466 is performed also depends on the degree of desired preciseness in the pattern matching.

Thus the pattern matching comprises performing a plurality of iterations of pattern matching using different ones of the sets of sample pixels, preferably with different step sizes. Where the local stability analysis determines a plurality of sets of sample pixels with differing stability neighborhood sizes, the pattern matching comprises performing a plurality of iterations of pattern matching using different ones of said sets of sample pixels in a coarse to fine manner, e.g., with successively smaller stability neighborhood sizes and/or successively smaller step sizes. If a first iteration of pattern matching determines one or more candidate locations in the target image which possibly include the template image, then one or more second iterations of pattern matching are performed at the determined one or more candidate locations in the target image. The first iteration of pattern matching utilizes a first stability neighborhood size and a first step size, and each of the one or more second iterations of pattern matching preferably utilize a smaller stability neighborhood size and a smaller step size.

As an example of the operation of the pattern matching performed in Figure 20, presume the method in step 448 detects a first set of sample pixel values which have a 9 x 9 stability neighborhood size and a second set of sample pixel values with a 5 x 5 stability neighborhood size, etc. When performing the pattern matching search in step 462, the method preferably starts using the sample pixel values which have the larger stability neighborhood size, e.g., the 9 x 9 stability neighborhood size. This search also uses a step size corresponding to this stability neighborhood size, e.g., a step size of 9 pixels. Thus, because these points or sample pixel values are stable over a 9 x 9 region, the search process is performed whereby, instead of visiting each pixel in the target image to compute the match values, the pattern matching is preferably performed at a step size of every 9 pixels.

Once this initial core search determines an initial set of possible matches, the second set of sample pixel values with a smaller neighborhood size, e.g., with the 5 x 5 stability regions, are used to perform a pattern matching at these initial match locations to perform a more refined search of these locations. This coarse to fine search based on stability neighborhood size and step size may be performed for a plurality of coarse to fine iterations until a desired degree of pattern matching has been accomplished.

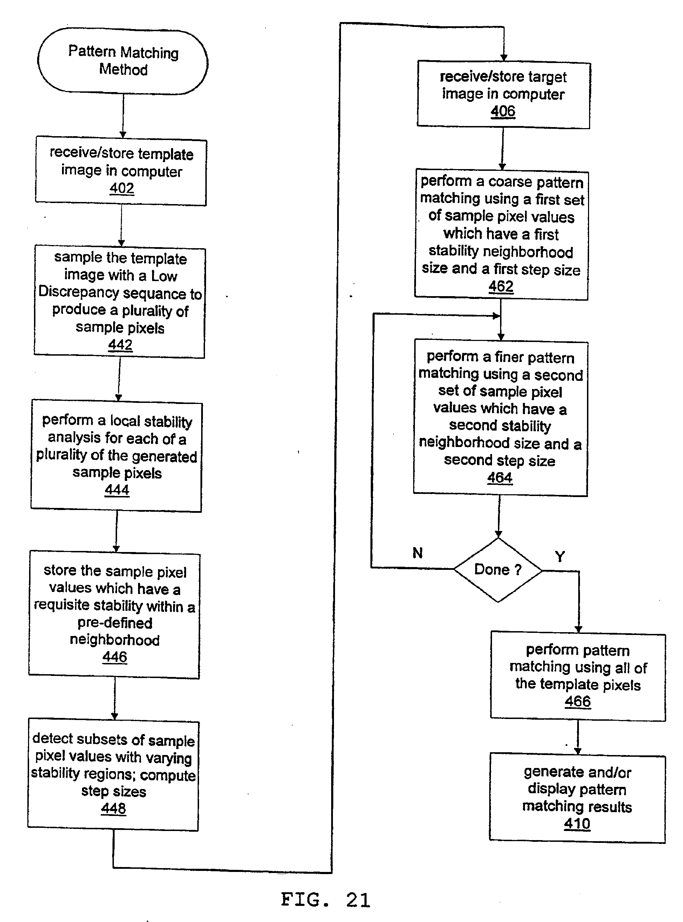

### Figure 21- Pattern Matching Method of the Preferred Embodiment

Figure 21 illustrates the pattern matching method described above. Figure 21 comprises the combination of Figures 5, 19 and 20 displayed in a single flowchart.

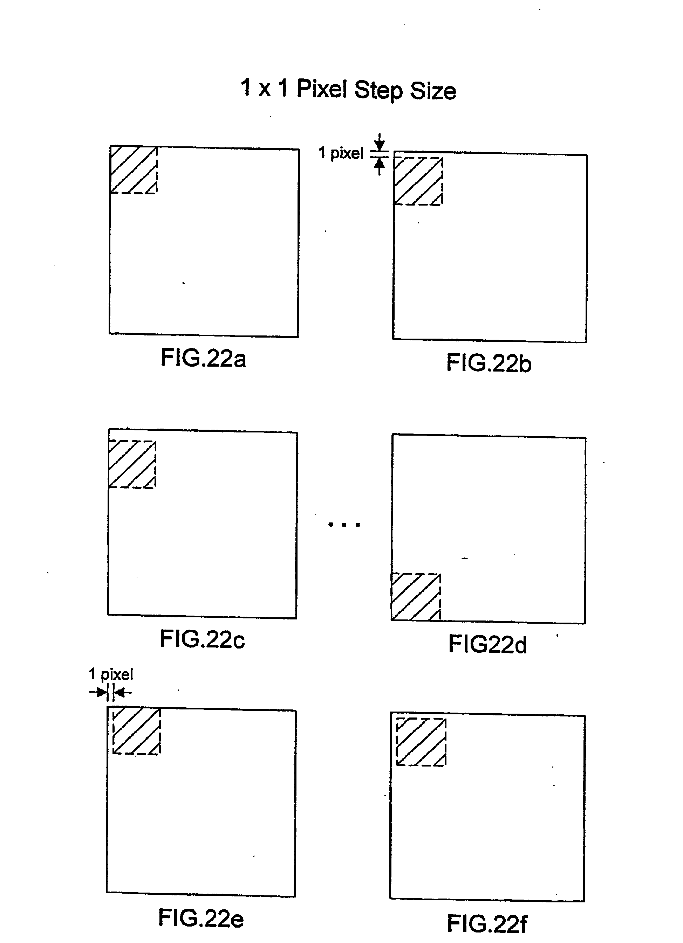

### Figures 22a - 22f: Comparing the Template Image with Every Possible Portion of the Target Image

Figures 22a - 22f illustrate a prior art pattern matching technique wherein the template image or sample pixels representing the template image are compared against every possible portion of the target image. In Figures 22a - 22f, the shaded block represents the template image or the sample pixels representing the template image.

As shown in Figures 22a - 22f, in prior art pattern matching techniques the template image is compared with each possible portion of the target image. Thus, for example, in Figure 22a the template image is compared with a corresponding portion of the target image at the upper left portion of the target image. After this comparison has been performed, the template image is moved down one scan line of pixels as shown in Figure 22b and compared with the next perspective portion of the target image. After this comparison, the template image is moved down again one pixel scan line as shown in Figure 22c and is compared with another portion of the target image. This is repeated a plurality of times until the template image reaches the very bottom left portion of the target image as shown in Figure 22d. After the template image is compared with the bottom left portion of the target image as shown in Figure 22d, the template image, for example, is moved back to the very top of the target image and moved across one vertical column of pixels to begin a new set of comparisons as shown in Figure 22e. After this comparison is performed in Figure 22e, the template image is moved down one horizontal scan line of pixels and compared with the next respective portion of the target image as shown in Figure 22f. This operation again repeats a plurality of times until the template image again reaches the bottom of the target image. At this point, the template image is moved back to the top of the target image and across one more vertical column of pixels (not shown) to perform another set of comparisons. The comparisons repeat until the template image has been compared with every possible corresponding portion of the target image. As can be readily seen, this results in a large amount of computations. It is also noted that the template image may be moved in various manners across the target image, such as horizontally, vertically, or combinations thereof.

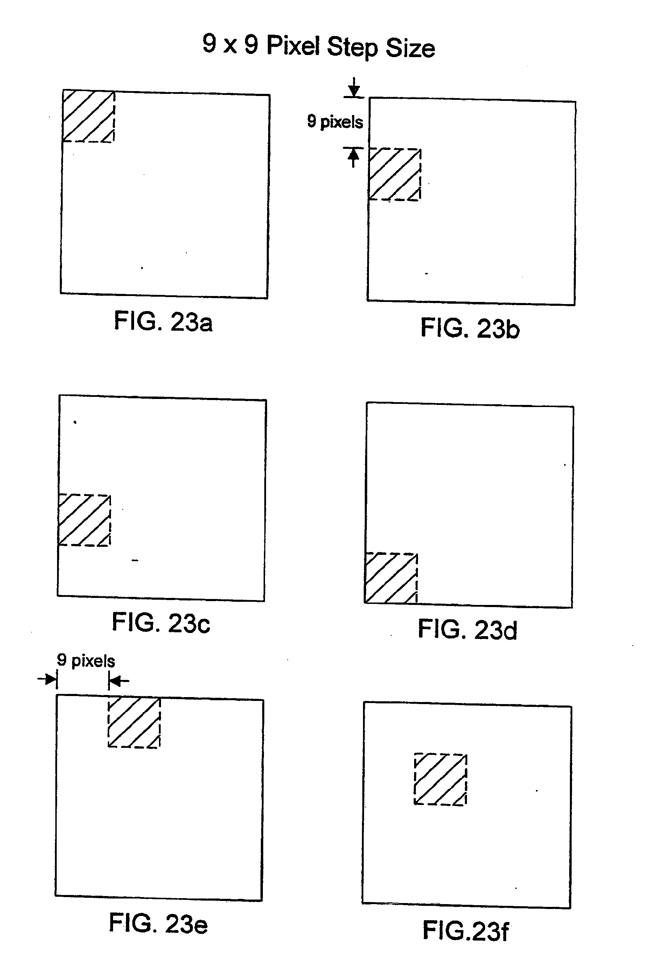

### Figures 23a - 23f Comparing the Template Image with the Target Image Using a 9 Pixel Step Size

Figures 23a - 23f illustrate the pattern matching performed using a step size of 9 pixels from the example above. As shown, for the coarse search using a step size of 9 pixels, the template image is stepped across respective portions of the target image with a 9 pixel step size instead of a 1 pixel step size. In other words, as shown in Figure 23a, the template image, or the sample pixels representing the template image, are initially compared with a corresponding portion of the target image, such as the upper left corner of the target image. After this comparison has been performed in Figure 23a, the template image, for example, is moved downward 9 pixel scan lines as shown in Figure 21b and is compared with the next respective portion of the target image. After this comparison has been performed in Figure 23b, the template image is moved another 9 scan lines downward as shown in Figure 23c, and the sample pixels are again compared with the respective portion of the target image. The comparisons are repeated until the template image reaches the bottom left portion of the target image, as shown in Figure 23d. After this comparison, the template image, for example, is moved back to the top of the target image and is moved over 9 vertical pixel columns to perform another comparison, as shown in Figure 23e. After this comparison is performed in Figure 23e, the template image is moved down 9 horizontal scan lines of pixels and compared with the next respective portion of the target image as shown in Figure 23f. This operation again repeats a plurality of times until the template image again reaches the bottom of the target image. At this point, the template image is moved back to the top of the target image and across 9 more vertical column of pixels (not shown) to perform another set of comparisons. This operation is performed until the template image has been stepped across the entire target image, using a 9 pixel step size. It is noted that Figures 23A - 23f are merely an example of stepping the template image across the target image, it being noted that the template image may be stepped across the target image in any of various manners, i.e., left to right, right to left, top to bottom, bottom to top, or other methodologies.

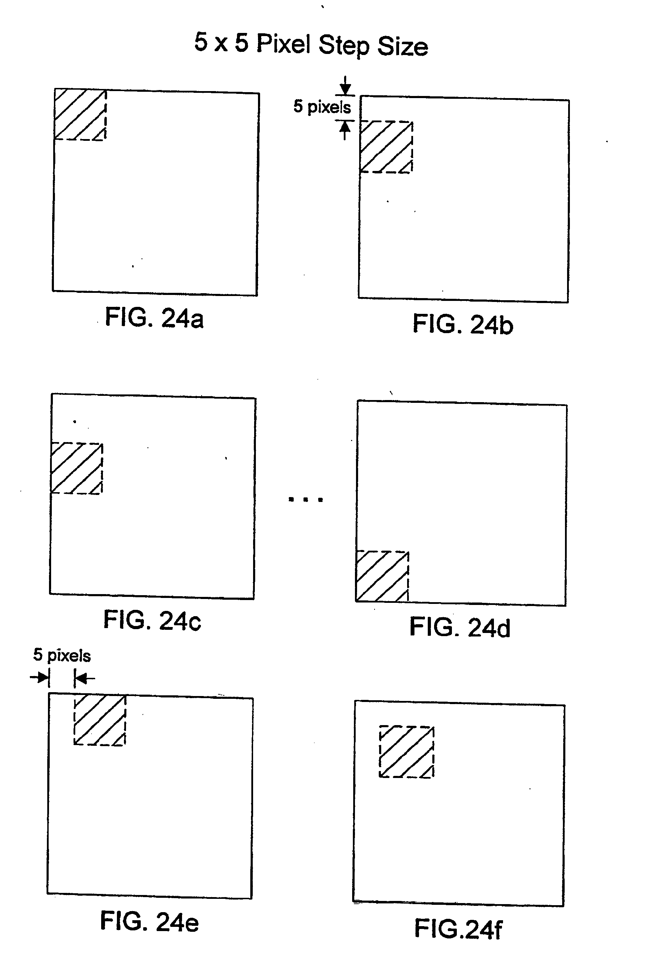

### Figures 24a - 24f: Comparing the Template Image with the Target Image Using a 5 Pixel Step Size

Figures 24a - 24f illustrate the pattern matching performed using a step size of 5 pixels from the example above. As shown, for the finer search using a step size of 5 pixels, the template image is stepped across respective portions of the target image with a 5 pixel step size. In the preferred embodiment, the finer search is only performed at locations which are indicated to be possible matches in the initial coarse search.

Thus, Figure 23a - 23f illustrate performance of a pattern matching using a first set of sample pixel values with a larger stability neighborhood. Figures 24a - 24f illustrate the pattern matching algorithm using a second set of sample pixel values with a smaller stability neighborhood size and smaller step size, preferably performed at possible match locations indicated by the first pattern matching step. As discussed above with respect to step 464, this finer search may be repeated zero or more times, each iteration preferably with a smaller step size and a greater number of samples, until a desired degree of precision has been obtained. A final pattern matching iteration may involve using all pixels in the template image at the one or more locations in the target image which are possible matches.

It is noted that performing pattern matching using a step size is a prior art technique. However, prior art methods generally use the same sample pixels or template image regardless of step size.

Therefore, in the preferred embodiment of the present invention, the method operates to select a subset of sample pixels for a respective pattern matching comparison based on a local stability analysis. The method of the present invention also operates to compute a step size based on a determined stability region or neighborhood of the respective sample pixels. The method further operates to use different subsets of sample pixels and different corresponding step sizes in a coarse to fine analysis.

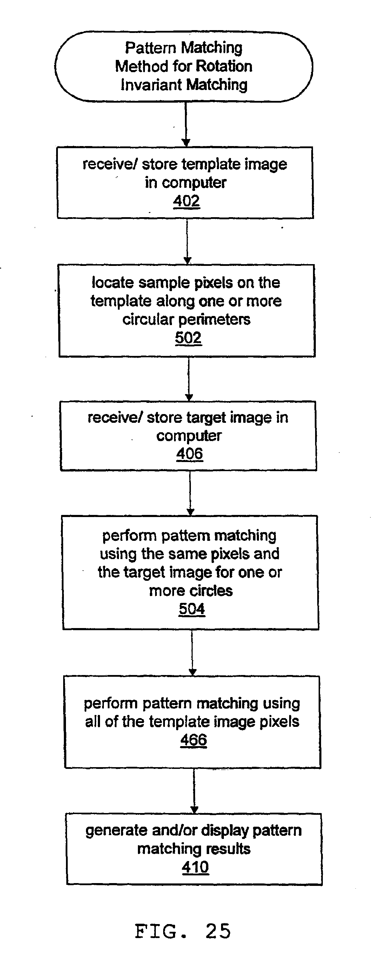

### Figure 25 - Rotation Invariant Pattern Matching

Figure 25 is a flowchart diagram illustrating a method for performing rotation invariant pattern matching. The method of Figure 25 includes characterizing or representing the template image for rotation invariant matching. Thus, in Figure 25 the objective is to efficiently sample the image to find a reduced set of sample pixel values or points that characterize the template accurately, and which are also conducive for finding the template image in the target image irrespective of the orientation of the template image in the target image. Steps in Figure 25 which are similar or identical to previously discussed steps have the same reference numerals for convenience.

As shown in Figure 25, in step 402 the method receives / stores the template image.

In step 502 the method operates to sample or locate pixel values in the template image along one or more rotationally invariant paths, e.g., the circular perimeter of one or more circles. This essentially operates to sample the image in a manner which is rotationally invariant, i.e., locate pixels in the template image along one or more circular perimeters or circular paths.

After step 502, in step 406 the target image is received and/or stored in the computer system.

After the target image is received and/or stored in step 406, in step 504 the method performs pattern matching using the circular perimeter sample pixels and the target image. The pattern matching may be performed for each of the one or more circles located in the template image. This rotation invariant pattern matching preferably uses a cyclic correlation. The cyclic correlation method first correlates the two signals, i.e., the samples pixels taken from the circular path and the respective pixels in the target image, to determine a correlation value. After this first correlation, the method shifts one signal, e.g., the sample pixels, with respect to the other signal by one sample pixel and again performs a correlation. This process is repeated, preferably until all possible correlations have been performed, i.e., until the sample pixels have been shifted back to their original location. After each of these correlations has been performed, the method determines the location and/or rotation of maximum correlation. This provides information (good estimations) on the location and rotation of the template image in the target image.

The pattern matching performed in step 504 may also be used to search for changes in size of the template image in the target image. In other words, the pattern matching performed in step 504 may also be used to search for scaled versions (larger or smaller) of the template image. This is accomplished by scaling (increasing or decreasing) the size of the search circles. More particularly, for scale invariant matching, the method uses sample pixels from a respective circular perimeter from the template (e.g., of radius "R"). During the pattern matching, the method changes the radius of the search circle. The method increases the radius R when searching for patterns that are bigger than the template image and decreases the radius R when searching for patterns in the image that are smaller than the template image.

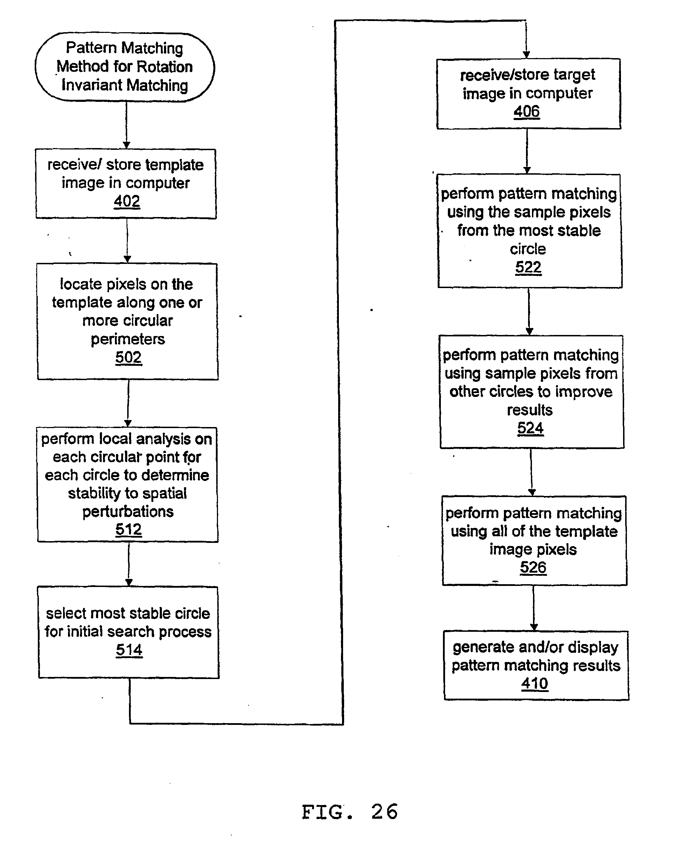

### Figure 26 - Rotation Invariant Pattern Matching Including a Coarse to Fine Search

Figure 26 is a flowchart diagram illustrating a method for performing rotation invariant pattern matching using a coarse to fine search procedure.

In step 402 the method receives / stores the template image.

In step 502 the method operates to locate pixel values in the template image along one or more rotationally invariant paths, e.g., along a circular perimeter of one or more circles. This essentially operates to sample the image in a manner which is rotationally invariant, i.e., locate sample pixels in the template image along one or more circular perimeters or circular paths.

In step 512 the method optionally performs a local stability analysis on the sample pixel values from each circular path to determine respective stability with respect to spatial perturbations. For each sample pixel, the local stability analysis comprises finding a neighborhood around the sample pixel where the value of the sample pixel correlates highly with the template image pixel values in the neighborhood. In step 512 the method determines the stability region or neighborhood size for the sample pixels of each of the respective circles. The method also preferably computes a step size for each of the circles. The local stability analysis thus determines a plurality of sets of sample pixels with differing stability neighborhood sizes.

In step 514 the method selects the sample pixels of the most stable circle for the initial search process. Alternatively, the method selects an ordering of sample pixels from at least a subset of the circles, preferably from most stable to least stable, for use in the coarse to fine search.

After step 514, in step 406 the target image is received and/or stored in the computer system.

After the target image is received and/or stored in step 406, in step 522 the method performs pattern matching using the sample pixels from one or more of the most stable circles. The method preferably compares the sample pixels with a plurality of portions of the target images, optionally using the computed step size to step the sample pixels across the target image. The pattern matching performed in step 522 preferably determines zero or more candidate locations where a rotated version of the template image may be located. This pattern matching also preferably determines a rotation value indicating the possible rotation of the template image in the target image based on the maximum correlation value obtained in the cyclic correlation.

After step 522, in step 524 the method performs pattern matching using sample pixels from one or more other circles to improve results. In the preferred embodiment, the method performs a coarse to fine search, wherein in step 522 the method determines one or more candidate locations and corresponding rotation values where the template image may be located. In step 524 the method performs pattern matching using sample pixels from one or more other less stable circles at these candidate locations and preferably using these rotation values. Thus, the method performs a coarse to fine search process as described above, wherein sample pixel values for the most stable circular path are first used in an initial search process, and then sample pixel values from additional circles are used at possible match locations to improve the initial search results and accurately determine the template's position and rotation in the image.

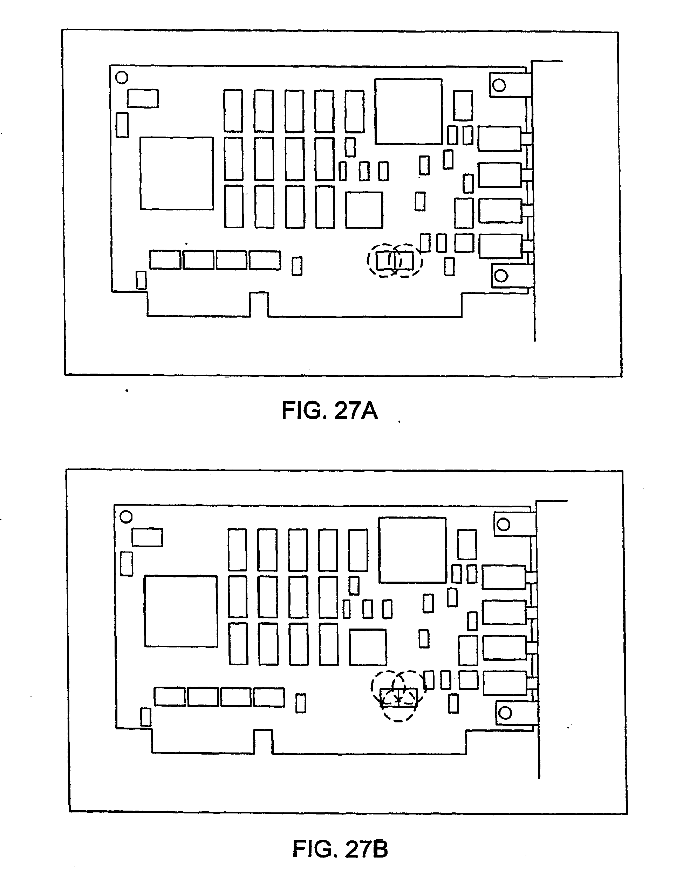

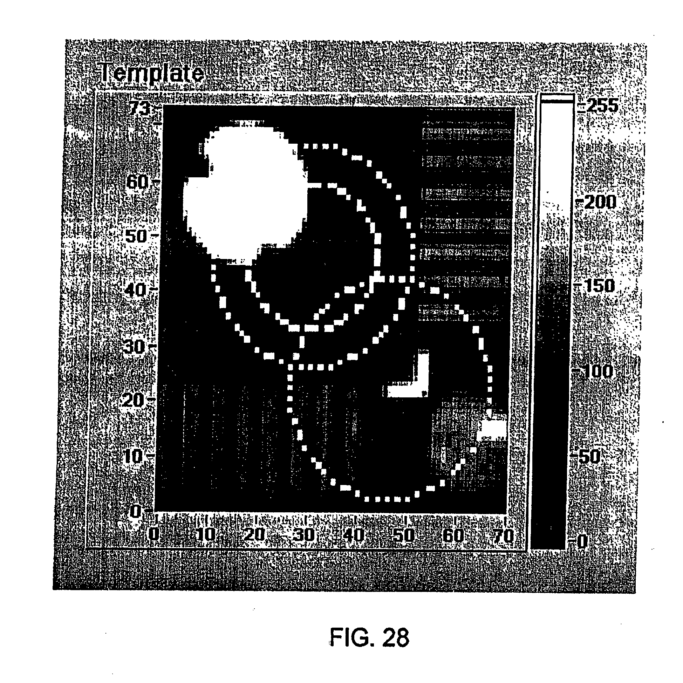

The rotation invariant pattern matching method preferably utilizes non-overlapping circular paths in the image. Also, in the preferred embodiment the method uses multiple circles to reject false matches. The method also may use concentric circles, as desired. Figures 27A and 27B illustrate the characterization of the template image (a printed circuit board) for rotation invariant matching using sample pixels taken from one or more circular paths. Figure 27A shows the use of sample pixels from concentric circles, and Figure 27B shows the use of non-concentric, non-overlapping circles. Figures 27A and 27B also show an example template image which is desired to be found in the target image. Figure 28 is an actual screen shot illustrating the use of concentric and non-concentric circles.

After step 524, in step 526 the method optionally performs a pattern matching using all of the template image pixels, preferably using a rotation value determined in either of steps 522 or 524 to rotate the template image pixels prior to the pattern matching. In other words, the template image is rotated to approximately match the orientation of the candidate template image in the target image, and then the pattern matching is performed using all of the template image pixels. This rotation of the template image prior to the pattern matching is necessary since the entire template image is not rotationally invariant.

After the pattern matching performed in steps 522, 524 and/or 526, the method then generates the results in step 410. In this case, the results include the location of zero or more template image instances in the target image, as well as the rotation or orientation of each instance.

The pattern matching performed in step 504 and/or the methods described in Figures 25 and 26 may also be used to search for changes in size of the template image in the target image. In other words, the pattern matching performed in step 504 may also be used to search for scaled versions (larger or smaller) of the template image. This is accomplished by scaling (increasing or decreasing) the size of the search circles. More particularly, for scale invariant matching, the method uses sample pixels from a respective circular perimeter from the template (e.g., a circle of radius "R"). During the pattern matching, the method changes the radius of the search circle. The method increases the radius R when searching for patterns that are bigger than the template image and decreases the radius R when searching for patterns in the image that are smaller than the template image.

Although the system and method of the present invention is described in connection with several embodiments, it is not intended to be limited to the specific forms set forth herein, but on the contrary, it is intended to cover such alternatives, modifications, and equivalents, as can be reasonably included within the scope of the invention as defined by the appended claims.

## Claims

1. A computer-implemented method for characterizing an image, the method comprising:
receiving (402) the image, wherein the image comprises a first plurality of pixels;
sampling (404) the image using a Low Discrepancy sequence to determine a second plurality of sample pixels in the image which characterize the image, wherein the second plurality of sample pixels represent the image with less than said first plurality of pixels and the Low Discrepancy sequence is designed to produce samples which maximally avoid each other;
storing the second plurality of sample pixels in a memory of the computer system;
performing a local stability analysis for at least a subset of said second plurality of sample pixels, wherein said stability analysis comprises for each of the sample pixels in the subset, finding a neighborhood around the sample pixel where the value of the sample pixel correlates highly with the image pixel values in the neighborhood, wherein said performing said local stability analysis determines a third plurality of sample pixels which have a desired degree of correlation, wherein said third plurality of sample pixels is less than said second plurality of sample pixels; and
storing the third plurality of sample pixels in the memory of the computer system.

2. The method of claim 1 wherein the Low Discrepancy sequence is a quasi-random sequence.

3. The method of any of the preceding claims, wherein said Low Discrepancy sequence sampling results in fewer points to characterize the image than a uniform or random sequence.

4. The method of any of the preceding claims, wherein the Low Discrepancy sequence is a sequence selected from the group comprising: Halton, Sobol, Faure, and Niederreiter.

5. The method of any of the preceding claims, wherein said sampling the image using a Low Discrepancy sequence comprises:
generating the Low Discrepancy sequence;
selecting pixels in the image using the Low Discrepancy sequence to determine the second plurality of sample pixels in the image which characterize the image.

6. The method of any of the preceding claims, further comprising:
receiving user input indicating a desired granularity of an image characterization;
wherein the method generates a number of sample pixels based on the desired granularity of the image characterization.

7. The method of claim 1, wherein said performing the local stability analysis operates to ensure stability of each of said subset of sample pixels to spatial perturbations around the sample pixel.

8. The method of any of the preceding claims,
wherein the image is a template image used in pattern matching;
the method further comprising:
receiving a target image;
comparing the sample pixels in the template image with pixels in the target image to determine one or more instances of the template image in the target image.

9. The method of any of the preceding claims, further comprising:
determining image statistics based on the sample pixels.

10. The method of any of the preceding claims, wherein said sampling the image and said storing the second plurality of sample pixels are performed by a first computer system;
the method further comprising:
the first computer system transmitting the second plurality of sample pixels to a second computer system over a network;
the second computer system displaying the second plurality of sample pixels.

11. The method of claim 10, further comprising:
the second computer system reconstructing pixels from the image which were not received, wherein said reconstructed pixels are displayed with the second plurality of sample pixels to display a more complete image.

12. The method of any of the preceding claims, wherein the image is a search image used in motion estimation, the method further comprising:
receiving a target image,
comparing the sample pixels in the search image with pixels in the target image to determine a motion vector.

13. A system for characterizing an image, wherein the image comprises a first plurality of pixels, the system comprising a memory (206) which stores the image, a processor (202) coupled to the memory which is operable to sample the image, wherein the memory is operable to store pluralities of sample pixels, said system being able to carry out a method of any of claims 1 through 12.

14. The system of claim 13, wherein the system is a machine vision system.

15. A memory medium which comprises program instructions for carrying out a method of any of claims 1 through 12.

## Patentansprüche

1. Ein computerimplementiertes Verfahren zum Charakterisieren eines Bildes, das Verfahren aufweisend:
Empfangen (402) des Bildes, wobei das Bild eine erste Vielzahl von Pixeln aufweist;
Abtasten (404) des Bildes unter Verwendung einer niedrig-Diskrepanzfolge, um eine zweite Vielzahl von Abtastpixeln in dem Bild zu bestimmen, welche das Bild charakterisieren, wobei die zweite Vielzahl von Abtastpixeln das Bild mit weniger als der ersten Vielzahl von Pixeln repräsentiert und die niedrig-Diskrepanzfolge designt ist, um Abtastwerte zu produzieren, die sich maximal gegenseitig vermeiden;
Speichern der zweiten Vielzahl von Abtastpixeln in einem Speicher von dem Computersystem;
Ausführen einer lokalen Stabilitätsanalyse für zumindest eine Untermenge von der zweiten Vielzahl von Abtastpixeln, wobei die Stabilitätsanalyse für jedes von den Abtastpixeln in der Untermange aufweist Finden einer Nachbarschaft um das Abtastpixel herum, wo der Wert von dem Abtastpixel in hohem Maße mit den Bildpixelwerten in der Nachbarschaft korreliert, wobei das Ausführen der lokalen Stabilitätsanalyse eine dritte Vielzahl von Abtastpixeln bestimmt, welche einen erwünschten Korrelationsgrad aufweist, wobei die dritte Vielzahl von Abtastpixeln weniger als die zweite Vielzahl von Abtastpixeln ist; und
Speichern der dritten Vielzahl von Abtastpixeln in dem Speicher von dem Computersystem.

2. Das Verfahren von Anspruch 1, wobei die niedrig-Diskrepanzfolge eine Quasi-Zufallsfolge ist.

3. Das Verfahren von einem von den vorangegangenen Ansprüchen, wobei das niedrig-Diskrepanzfolge-Abtasten in weniger Punkten um das Bild zu charakterisieren resultiert als eine einheitliche oder Zufallsfolge.

4. Das Verfahren von einem von den vorangegangenen Ansprüchen, wobei die niedrig-Diskrepanzfolge eine Folge ist ausgewählt von der Gruppe aufweisend: Halton, Sobol, Faure, und Niederreiter.

5. Das Verfahren von einem von den vorangegangenen Ansprüchen, wobei das Abtasten des Bildes unter Verwendung einer niedrig-Diskrepanzfolge aufweist:
Erzeugen der niedrig-Diskrepanzfolge;
Auswählen von Pixeln in dem Bild unter Verwendung der niedrig-Diskrepanzfolge, um die zweite Vielzahl von Abtastpixeln in dem Bild zu bestimmen, welche das Bild charakterisiert.

6. Das Verfahren von einem von den vorangegangenen Ansprüchen, weiter aufweisend:
Empfangen von Benutzereingabe anzeigend eine erwünschte Granularität von einer Bildcharakterisierung;
wobei das Verfahren eine Anzahl von Abtastpixeln erzeugt basierend auf der erwünschten Granularität von der Bildcharakterisierung.

7. Das Verfahren von Anspruch 1, wobei das Ausführen der lokalen Stabilitätsanalyse betrieben wird, um Stabilität von jedem von der Untergruppe von Abtastpixeln gegenüber räumlicher Störungen um den Abtastpixel herum sicherzustellen.

8. Das Verfahren von einem von den vorangegangenen Ansprüchen, wobei das Bild ein Vorlagebild ist, das beim Musterabgleich verwendet wird;
das Verfahren weiter aufweisend:
Empfangen eines Zielbildes;
Vergleichen der Abtastpixel in dem Vorlagebild mit Pixeln in dem Zielbild, um eine oder mehrere Instanzen von dem Vorlagebild in dem Zielbild zu bestimmen.

9. Das Verfahren von einem von den vorangegangenen Ansprüchen, weiter aufweisend:
Bestimmen von Bildstatistiken basierend auf den Abtastpixeln.

10. Das Verfahren von einem von den vorangegangenen Ansprüchen, wobei das Abtasten des Bildes und das Speichern der zweiten Vielzahl von Abtastpixeln von einem ersten Computersystem durchgeführt werden;
das Verfahren weiter aufweisend:
das erste Computersystem überträgt die zweite Vielzahl von Abtastpixeln an ein zweites Computersystem über ein Netzwerk;
das zweite Computersystem zeigt die zweite Vielzahl von Abtastpixeln an.

11. Das Verfahren von Anspruch 10, weiter aufweisend:
Das zweite Computersystem rekonstruiert Pixel von dem Bild, welche nicht empfangen wurden, wobei die rekonstruierten Pixel mit der zweiten Vielzahl von Abtastpixeln angezeigt werden, um ein vollständigeres Bild anzuzeigen.

12. Das Verfahren von einem von den vorangegangenen Ansprüchen, wobei das Bild ein Suchbild ist, welches bei Bewegungseinschätzung verwendet wird, das Verfahren weiter aufweisend:
Empfangen eines Zielbildes,
Vergleichen der Abtastpixel in dem Suchbild mit Pixeln in dem Zielbild, um einen Bewegungsvektor zu bestimmen.

13. Ein System zum Charakterisieren eines Bildes, wobei das Bild eine erste Vielzahl von Pixeln aufweist, das System aufweisend einen Speicher (206), welcher das Bild speichert, einen Prozessor (202) verbunden mit dem Speicher, welcher betriebsbereit ist, um das Bild abzutasten, wobei der Speicher betriebsbereit ist, um Vielzahlen von Abtastpixeln zu speichern, das System ist fähig ein Verfahren von einem von den Ansprüchen 1 bis 12 auszuführen.

14. Das System von Anspruch 13, wobei das System ein Bildverarbeitungssystem ist.

15. Ein Speichermedium, welches Programmanweisungen aufweist zum Ausführen eines Verfahrens von einem von den Ansprüchen 1 bis 12.

## Revendications

1. Un procédé mis en oeuvre par informatique pour caractériser une image, le procédé comprenant :
la réception (402) de l'image, l'image comprenant une première pluralité de pixels ;
l'échantillonnage (404) de l'image en utilisant une suite à discrépance faible pour déterminer une seconde pluralité de pixels échantillons dans l'image qui caractérisent l'image, la seconde pluralité de pixels échantillons représentant l'image avec moins que ladite première pluralité de pixels et la suite à discrépance faible étant conçue pour produire des échantillons qui s'évitent au maximum les uns les autres ;
la mémorisation de la seconde pluralité de pixels échantillons dans une mémoire du système informatique ;
l'exécution d'une analyse de stabilité locale pour au moins un sous-ensemble de ladite seconde pluralité de pixels échantillons, ladite analyse de stabilité comprenant, pour chacun des pixels échantillons du sous-ensemble, la recherche d'un voisinage autour du pixel échantillon où la valeur du pixel échantillon présente une corrélation élevée avec les valeurs de pixels d'image dans le voisinage, ladite exécution de ladite analyse de stabilité locale déterminant une troisième pluralité de pixels échantillons qui présentent un degré souhaité de corrélation, ladite troisième pluralité de pixels échantillons étant moindre que ladite seconde pluralité de pixels échantillons ; et
la mémorisation de la troisième pluralité de pixels échantillons dans la mémoire du système informatique.

2. Le procédé de la revendication 1, dans lequel la suite à discrépance faible est une suite quasi aléatoire.

3. Le procédé de l'une des revendications précédentes, dans lequel ledit échantillonnage par suite à discrépance faible produit moins de points pour caractériser l'image qu'une séquence uniforme ou aléatoire.

4. Le procédé de l'une des revendications précédentes, dans lequel la suite à discrépance faible est une suite choisie dans le groupe comprenant : Halton, Sobol, Faure et Niederreiter.

5. Le procédé de l'une des revendications précédentes, dans lequel ledit échantillonnage de l'image en utilisant une suite à discrépance faible comprend :
la génération de la suite à discrépance faible ;
la sélection de pixels dans l'image en utilisant la suite à discrépance faible pour déterminer la seconde pluralité de pixels échantillons dans l'image qui caractérisent l'image.

6. Le procédé de l'une des revendications précédentes, comprenant en outre :
la réception d'une entrée utilisateur indiquant une granularité souhaitée d'une caractérisation de l'image ;
dans lequel le procédé génère un nombre de pixels échantillons sur la base de la granularité souhaitée de la caractérisation de l'image.

7. Le procédé de la revendication 1, dans lequel ladite exécution de l'analyse de stabilité locale opère de manière à assurer la stabilité de chacun dudit sous-ensemble de pixels échantillons à l'égard des perturbations spatiales autour du pixel échantillon.

8. Le procédé de l'une des revendications précédentes, dans lequel l'image est une image modèle utilisée en reconnaissance de forme ;
le procédé comprenant en outre :
la réception d'une image cible ;
la comparaison des pixels échantillons de l'image modèle avec des pixels de l'image cible pour déterminer une ou plusieurs instances de l'image modèle dans l'image cible.

9. Le procédé de l'une des revendications précédentes, comprenant en outre :
la détermination de statistiques d'image sur la base des pixels échantillons.

10. Le procédé de l'une des revendications précédentes, dans lequel ledit échantillonnage de l'image et ladite mémorisation de la seconde pluralité de pixels échantillons sont exécutés par un premier système informatique ;
le procédé comprenant en outre :
l'émission par le premier système informatique de la seconde pluralité de pixels échantillons vers un second système informatique via un réseau ;
l'affichage par le second système informatique de la seconde pluralité de pixels échantillons.

11. Le procédé de la revendication 10, comprenant en outre :
la reconstruction par le second système informatique de pixels provenant de l'image qui n'avaient pas été reçus, lesdits pixels reconstruits étant affichés avec la seconde pluralité de pixels échantillons pour afficher une image plus complète.

12. Le procédé de l'une des revendications précédentes, dans lequel l'image est une image de recherche utilisée en estimation de mouvement, le procédé comprenant en outre :
la réception d'une image cible,
la comparaison des pixels échantillons de l'image de recherche avec des pixels de l'image cible pour déterminer un vecteur de mouvement.

13. Un système de caractérisation d'une image, où l'image comprend une première pluralité de pixels, le système comprenant une mémoire (206) qui mémorise l'image, un processeur (202) couplé à la mémoire qui peut être mis en oeuvre pour échantillonner l'image, la mémoire pouvant être mise en oeuvre pour mémoriser des pluralités de pixels échantillons, ledit système étant capable de mettre en oeuvre un procédé selon l'une des revendications 1 à 12.

14. Le système de la revendication 13, dans lequel le système est un système de vision par machine.

15. Un support-mémoire qui comprend des instructions de programme pour mettre en oeuvre un procédé selon l'une des revendications 1 à 12.
